# EUROPEAN PATENT APPLICATION

(11) **EP 4 104 698 A1**
(43) Date of publication of application: **21.12.2022**
(21) Application number: 20918578.4
(22) Date of filing: 18.06.2020
(51) Int. Cl.: A41D 13/11, B29C 65/02, B29C 69/00

(54) **FULLY AUTOMATIC FACE MASK PRODUCTION LINE**

(30) Priority: 15.02.2020 CN 202020171700 U
(71) Applicant: Guangdong Lyric Robot Automation Co., Ltd., Huicheng District Huizhou Guangdong 516000 (CN)
(72) Inventor: ZHOU, Junxiong, Guangdong 516000 (CN); ZHOU, Junjie, Guangdong 516000 (CN); DU, Yixian, Guangdong 516000 (CN); YAO, Zanbin, Guangdong 516000 (CN); CAI, Haisheng, Guangdong 516000 (CN); CHEN, De, Guangdong 516000 (CN); LUO, Jian, Guangdong 516000 (CN)
(74) Representative: Purdylucey Intellectual Property
(86) International application number: PCT/CN2020/096771
(87) International publication number: WO 2021/159647

(57) **Abstract**

A fully automatic mask production line is disclosed, including a mask material loading device, a folding device, a nose wire loading device, a mask body forming device, a mask overturning and conveying device, an ear loop welding device and a collecting device. The mask material loading device is adjacent to the folding device, the nose wire loading device is adjacent to the folding device, a feeding end of the mask body forming device is arranged opposite to the nose wire loading device and the folding device respectively, the mask overturning and conveying device is adjacent to the mask body forming device, and the ear loop welding device and the collecting device are respectively arranged on a conveying path and a conveying tail end of the mask overturning and conveying device. In the production line, the mask material loading device, the folding device, the nose wire loading device, the mask body forming device, the mask overturning and conveying device, the ear loop welding device and the collecting device are arranged in a cooperative manner, such that multiple procedures for mask production are consecutively carried out, the one-step formation of masks is achieved, and the production efficiency of the masks is guaranteed.

## Description

### TECHNICAL FIELD

The disclosure relates to the technical field of mask production, and more particularly, to a fully automatic mask production line.

### BACKGROUND

Masks are sanitary products used to filter air entering a nose and a mouth, and protect a respiratory system and health of a human body. Wearing a mask can protect and filter out germs and pollutants that affect the health of the human body, such as droplets, dust and exhaust gas, from entering the human body. The mask mainly includes a mask body composed of multiple layers of filtering materials, a nose wire and ear loops. In the existing technology, each mask production procedure is carried out manually with a plurality of different devices, which leads to poor continuity of mask production, and further affects the production efficiency of the masks.

### SUMMARY

Aiming at the shortcomings in the existing technology, the disclosure provides a fully automatic mask production line.

The fully automatic mask production line disclosed by the disclosure includes:
a mask material loading device configured for integrating and loading a mask material;
a folding device adjacent to the mask material loading device, wherein the folding device is configured to receive the integrated and loaded mask material, and fold the mask material into a semi-finished product of a mask body;
a nose wire loading device adjacent to the folding device, wherein the nose wire folding device is configured for loading a nose wire;
a mask body forming device with a feeding end respectively opposite to the folding device and the nose wire loading device, wherein the mask body forming device is configured to receive and form the nose wire and the semi-finished product of the mask body that are loaded into the mask body;
a mask overturning and conveying device adjacent to the mask body forming device, wherein the mask overturning and conveying device is configured to receive and turn over the mask body, and then conveys the mask body;
two ear loop welding devices arranged on a conveying path of the mask overturning and conveying device, wherein the two ear loop welding devices respectively weld a right ear loop and a left ear loop onto the mask body to form a finished mask product; and
a collecting device arranged at a tail end of the conveying path of the mask overturning and conveying device, which is configured for collecting the finished mask product.

According to an embodiment of the disclosure, the mask material loading device includes a mask material loading frame, at least two mask material loading mechanisms and an integrating mechanism; the at least two mask material loading mechanisms and the integrating mechanism are respectively arranged on the mask material loading frame, and each of the mask material loading mechanisms includes a mask material loading assembly, a mask material tensioning assembly and a mask material guiding assembly which are arranged in sequence; the integrating mechanism is adjacent to the mask material guiding assembly; and the mask material loading assembly is configured for loading the mask material, the mask material tensioning assembly is configured to receive and tension the loaded mask material, and the mask material guiding assembly is configured to receive and guide the tensioned mask material to the integrating mechanism for loading and integrating. Through the cooperative arrangement of the mask material tensioning assembly and the mask material guiding assembly, the loaded mask material is tensioned and then flattened and guided, thus increasing the flatness of the integrating mechanism when loading and integrating, and ensuring the efficiency and quality of subsequent mask production.

According to one embodiment of the disclosure, the folding device includes a creasing assembly and a folding assembly; a feeding end of the creasing assembly is adjacent to an integrating and loading end of the mask material loading device, and the folding assembly is arranged on a discharge end of the creasing assembly; the creasing assembly includes a first creasing roller and a second creasing roller, the first creasing roller is arranged opposite to the second creasing roller, the first creasing roller and the second creasing roller are configured to perform creasing on the mask material when the integrated and loaded mask material passes between the first creasing roller and the second creasing roller; the folding assembly includes a first folding member and a second folding member; and the first folding member and the second folding member are configured to fold the mask material subjected to the creasing. In this way, the mask material subjected to the creasing can be folded by the first folding member and the second folding member, so that a deviation caused by loosening of creases in the conveying process is effectively avoided, and a possibility of crooked creases on a surface of the mask is reduced, and meanwhile, a folding error is avoided, and a production quality of products is guaranteed.

According to one embodiment of the disclosure, the nose wire loading device includes a nose wire loading mechanism, a nose wire straightening mechanism, a nose wire fixed-length conveying mechanism, a nose wire fixed-length cutting mechanism and a synchronous transmission mechanism; the nose wire loading mechanism, the nose wire straightening mechanism, the nose wire fixed-length conveying mechanism and the nose wire fixed-length cutting mechanism are arranged in sequence; the synchronous transmission mechanism is respectively connected with the nose wire fixed-length conveying mechanism and the nose wire fixed-length cutting mechanism; and the nose wire loading mechanism is configured for loading the nose wire, the nose wire straightening mechanism is configured to receive and straighten the loaded nose wire, the nose wire fixed-length conveying mechanism is configured to receive the straightened nose wire and convey the nose wire with fixed-length to the nose wire fixed-length cutting mechanism, the nose wire fixed-length cutting mechanism is configured to perform fixed-length cutting on the fixed-length conveyed nose wire, and the synchronous transmission mechanism is configured to synchronize the conveying of the nose wire fixed-length conveying mechanism with the cutting of the nose wire fixed-length cutting mechanism. The cooperative arrangement of the nose wire loading mechanism, the nose wire straightening mechanism, the nose wire fixed-length conveying mechanism, the fixed-length cutting mechanism and the synchronous transmission mechanism smoothly realizes the procedures of loading, straightening and fixed-length cutting of the nose wire, and ensures the consistency of fixed-length cutting, thus ensuring the quality of subsequent mask production.

According to one embodiment of the disclosure, the mask body forming device includes a shaping mechanism and a molding mechanism; the shaping mechanism is arranged opposite to the folding device and the nose wire loading device respectively, and is configured to receive, shape and feed the semi-finished product of the mask body and the nose wire into the molding mechanism; and the molding mechanism is connected with the synchronous transmission mechanism. The consistency of loading the nose wire and shaping the mask body is ensured by connecting the molding mechanism with the synchronous transmission mechanism.

According to one embodiment of the disclosure, the molding mechanism further includes a body cutting assembly; and the body cutting assembly is located on a conveying path of a conveying assembly, and the body cutting assembly is configured for cutting the continuous mask body.

According to one embodiment of the disclosure, the mask overturning and conveying device includes an overturning and transmitting mechanism and a conveying mechanism which are arranged in sequence; the overturning and transmitting mechanism is configured for receiving and turning over the mask body, and conveying the mask body to the conveying mechanism; the conveying mechanism is configured to convey the mask body through the ear loop welding device for ear loop welding, and then convey the mask body to the collecting device for collecting the mask body; wherein, the overturning and transmitting mechanism includes a transmitting assembly and an overturning assembly; and a transmitting belt of the transmitting assembly is arranged in parallel with an overturning plate of the overturning assembly, and the overturning plate is capable of turning over by 360 degrees. The arrangement of the production line is facilitated by setting the overturning and transmitting mechanism and the conveying mechanism.

According to one embodiment of the disclosure, the collecting device includes a collecting conveying assembly and a collecting pressing assembly; a feeding end of the collecting conveying assembly faces a discharge end of the mask overturning and conveying device; and the collecting pressing assembly is located at a discharge end of the collecting conveying assembly.

According to one embodiment of the disclosure, the ear loop welding device includes a welding mechanism, a wire material loading mechanism, an ear loop transmission mechanism, a cutting mechanism and a welding driving mechanism; the welding mechanism is arranged on the conveying path of the mask overturning and conveying device, and a welding end of the welding mechanism faces the mask overturning and conveying device; the wire material loading mechanism is arranged on the conveying path of the mask overturning and conveying device, and the wire material loading mechanism is configured for loading ear loop wire material; the wire material loading mechanism and the welding mechanism are respectively arranged at two opposite sides of the mask overturning and conveying device, the ear loop transmission mechanism is arranged above the mask overturning and conveying device, and the ear loop transmission mechanism is located between the welding mechanism and the wire material loading mechanism; the ear loop transmission mechanism is configured to receive the ear loop wire material loaded by the wire material loading mechanism, and transmit and shape the ear loop wire material; the cutting mechanism is arranged at one side of the ear loop transmission mechanism, and the cutting mechanism is configured to cut the transmitted and shaped ear loop wire material to form the ear loop; and the welding driving mechanism is arranged above the ear loop transmission mechanism, the welding driving mechanism is configured to drive the ear loop to the welding mechanism, and the welding mechanism is configured to weld the ear loop onto the mask body. Through the cooperative arrangement of the welding mechanism, the wire material loading mechanism, the ear loop transmission mechanism, the cutting mechanism and the welding driving mechanism, the automatic loading, shaping, cutting and welding of the ear loop to the mask body are smoothly realized, thus improving the production efficiency of the ear loop and ensuring the production efficiency of masks.

According to one embodiment of the disclosure, the ear loop transmission mechanism includes a transmission bearing frame, a transmitting shaping assembly, a material clamping driving assembly, a material rotating driving assembly and an unloading driving assembly; the transmitting shaping assembly is located above the mask overturning and conveying device; the material rotating driving assembly is arranged on the transmission bearing frame, an output end of the material rotating driving assembly is connected with the transmitting shaping assembly, and the material rotating driving assembly is configured to drive the transmitting shaping assembly to rotate; the material clamping driving assembly and the unloading driving assembly are respectively arranged on the transmission bearing frame, drive ends of the material clamping driving assembly and the unloading driving assembly directly face a material clamping end and an unloading end of the transmitting shaping assembly respectively; and the transmitting shaping assembly is configured to receive the loaded ear loop wire material, the material clamping driving assembly is configured to drive the material clamping end of the transmitting shaping assembly to clamp the ear loop wire material, the material rotating driving assembly is configured to drive the transmitting shaping assembly to rotate so as to transmit and shape the ear loop wire material, and the unloading driving assembly is configured to drive the unloading end of the transmitting shaping assembly to unload the shaped and cut ear loop.

According to the disclosure, the mask material loading device, the folding device, the nose wire loading device, the mask body forming device, the mask overturning and conveying device, the ear loop welding device and the collecting device are arranged in a cooperative manner, such that multiple procedures for mask production are consecutively carried out, the one-step formation of masks is achieved, and the production efficiency of the masks is guaranteed.

### BRIEF DESCRIPTION OF THE DRAWINGS

The accompanying drawings illustrated herein serve to provide a further understanding of the disclosure and constitute a part of the disclosure, and the illustrative embodiments of the disclosure and the description thereof serve to explain the disclosure, and do not constitute inappropriate limitation to the disclosure. In the drawings:
FIG. 1 is a schematic structural diagram of a fully automatic mask production line according to an embodiment of the disclosure;
FIG. 2 is a schematic structural diagram of a mask material loading device according to an embodiment of the disclosure;
FIG. 3 is an enlarged view of a part A of FIG. 2 according to an embodiment of the disclosure;
FIG. 4 is an enlarged view of a part B of FIG. 2 according to an embodiment of the disclosure;
FIG. 5 is a schematic structural diagram of a mask material guiding assembly according to an embodiment of the disclosure;
FIG. 6 is a structural diagram of a folding mechanism according to an embodiment of the disclosure;
FIG. 7 is another structural diagram of the folding mechanism according to an embodiment of the disclosure;
FIG. 8 is a schematic structural diagram of a creasing assembly according to an embodiment of the disclosure;
FIG. 9 is a schematic structural diagram of a folding assembly according to an embodiment of the disclosure;
FIG. 10 is a schematic structural diagram of a nose wire loading device according to an embodiment of the disclosure;
FIG. 11 is another schematic structural diagram of the nose wire loading device according to an embodiment of the disclosure;
FIG. 12 is an enlarged view of a part C of FIG. 10 according to an embodiment of the disclosure;
FIG. 13 is a schematic structure diagram of a fixed-length cutting mechanism according to an embodiment of the disclosure;
FIG. 14 is a cross sectional view of the fixed-length cutting mechanism according to an embodiment of the disclosure;
FIG. 15 is a schematic structural diagram of an individual mask body;
FIG. 16 is a schematic structure diagram of a mask body forming device according to an embodiment of the disclosure;
FIG. 17 is a schematic structure diagram of a shaping mechanism according to an embodiment of the disclosure;
FIG. 18 is a schematic structure diagram of a first shaping plate according to an embodiment of the disclosure;
FIG. 19 is a schematic structure diagram of a second shaping plate according to an embodiment of the disclosure;
FIG. 20 is a schematic structure diagram of a molding mechanism according to an embodiment of the disclosure;
FIG. 21 is another schematic structure diagram of the molding mechanism according to an embodiment of the disclosure;
FIG. 22 is a schematic structural diagram of a side-edge pressure roller according to an embodiment of the disclosure;
FIG. 23 is a schematic structural diagram of a front-rear edge pressure roller according to an embodiment of the disclosure;
FIG. 24 is a schematic structure diagram of a body cutting assembly according to an embodiment of the disclosure;
FIG. 25 is a schematic structural diagram of a mask overturning and conveying device and a collecting device according to an embodiment of the disclosure;
FIG. 26 is a schematic structure diagram of an overturning and transmitting mechanism according to an embodiment of the disclosure;
FIG. 27 is a schematic structure diagram of a collecting device according to an embodiment of the disclosure;
FIG. 28 is another schematic structure diagram of the collecting device according to an embodiment of the disclosure;
FIG. 29 is a schematic structural diagram of a mask ear loop welding device and an overturning and transmitting mechanism according to an embodiment of the disclosure;
FIG. 30 is a schematic structural diagram of the mask ear loop welding device and the overturning and transmitting mechanism according to an embodiment of the disclosure from another perspective;
FIG. 31 is a schematic structural diagram of an ear loop transmission mechanism and a welding driving mechanism according to an embodiment of the disclosure;
FIG. 32 is another schematic structural diagram of the ear loop transmission mechanism and the welding driving mechanism according to an embodiment of the disclosure;
FIG. 33 is an enlarged view of a part D of FIG. 35 according to an embodiment of the disclosure;
FIG. 34 is a schematic structure diagram of a cutting mechanism according to an embodiment of the disclosure; and
FIG. 35 is yet another schematic structural diagram of the ear loop transmission mechanism and the welding driving mechanism according to an embodiment of the disclosure.

### DETAILED DESCRIPTION

The following drawings will disclose a plurality of embodiments of the disclosure, and for the sake of clear explanation, many practical details will be explained in the following description. However, it should be understood that these practical details should not be used to limit the disclosure. That is to say, in some embodiments of the disclosure, these practical details are unnecessary. In addition, in order to simplify the drawings, some conventional structures and components will be shown in a simple schematic way in the drawings.

It should be noted that all directional indicators in the embodiments of the disclosure, such as up, down, left, right, front, back, and the like, are only used to explain the relative positional relationships and movement situations between components in a certain posture as shown in the accompanying drawings. If the specific posture changes, the directional indicators will also change accordingly.

Moreover, the descriptions of "first" and "second" in the disclosure are only configured for descriptive purposes, not specifically referring to the order or sequence, nor are they used to limit the disclosure, but are only used to distinguish between components or operations described in the same technical terms, and cannot be understood as indicating or implying their relative importance or implicitly indicating the number of indicated technical features. Therefore, the features defined with "first" and "second" can explicitly or implicitly include at least two of the features. In addition, the technical solutions of various embodiments may be combined with each other, but it has to be based on what those having ordinary skills in the art can achieve. When the combination of the technical solutions is contradictory or impossible to realize, it should be considered that the combination of such technical solutions does not exist and is not within the scope of protection claimed by the disclosure.

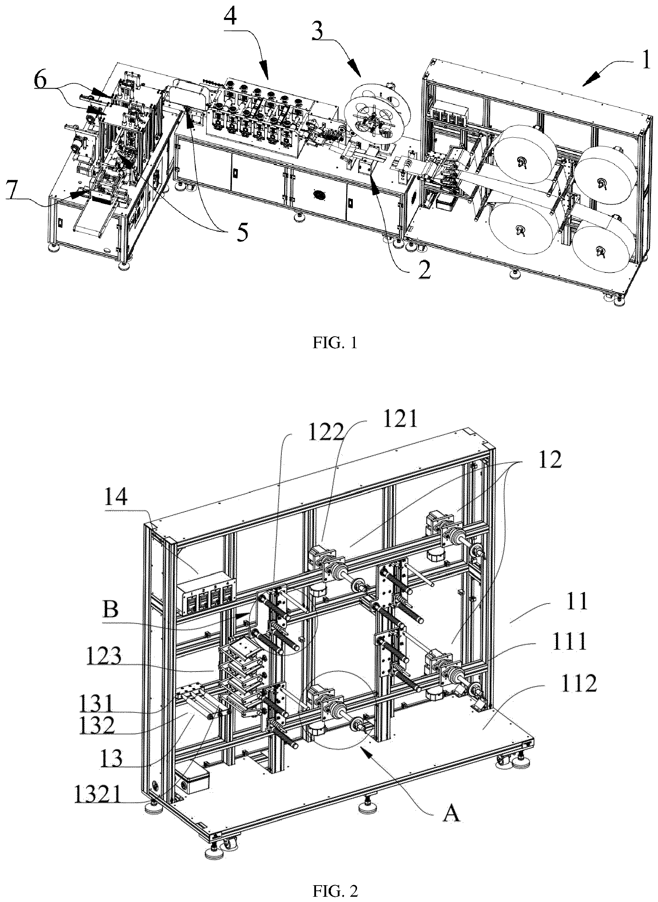

In order to further understand the contents, features and effects of the disclosure, the following embodiments are cited and explained in detail with the accompanying drawings:
Referring to FIG. 1, FIG. 1 is a schematic structural diagram of a fully automatic mask production line according to an embodiment of the disclosure. The fully automatic mask production line according to an embodiment of the disclosure includes a mask material loading device 1, a folding device 2, a nose wire loading device 3, a mask body forming device 4, a mask overturning and conveying device 5, an ear loop welding device 6 and a collecting device 7. The mask material loading device 1 is configured for integrating and loading a mask material. The folding device 2 is adjacent to the mask material loading device 1. The folding device 2 receives the integrated and loaded mask material, and folds the material into a semi-finished product of a mask body. The nose wire loading device is adjacent to the folding device 2, and the nose wire folding device 3 is configured for loading a nose wire. A feeding end of the mask body forming device 4 is arranged opposite to the folding device 2 and the nose wire loading device 3 respectively. The mask body forming device 4 receives the nose wire and the semi-finished product of the mask body that are loaded, and forms the two into the mask body. The mask overturning and conveying device 5 is adjacent to the mask body forming device 4. The mask overturning and conveying device 5 receives and turns over the mask body, and then conveys the mask body. Two ear loop welding devices 6 are respectively arranged on a conveying path of the mask overturning and conveying device 5. The two ear loop welding devices 6 respectively weld a right ear loop and a left ear loop onto the mask body to form a finished mask product. A collecting device 7 is arranged at a tail end of the conveying path of the mask overturning and conveying device 5, and the collecting device 7 is configured for collecting the finished mask product. The mask material loading device 1, the folding device 2, the nose wire loading device 3, the mask body forming device 4, the mask overturning and conveying device 5, the ear loop welding device 6 and the collecting device 7 are arranged in a cooperative manner, such that multiple procedures for mask production are consecutively carried out, the one-step formation of masks is achieved, and the production efficiency of the masks is guaranteed.

Continuously referring to FIG. 1 and FIG. 2, FIG. 2 is a schematic structural diagram of the mask material loading device according to an embodiment of the disclosure. Further, the mask material loading device 1 includes a mask material loading frame 11, at least two mask material loading mechanisms 12 and an integrating mechanism 13. The at least two mask material loading mechanisms 12 and the integrating mechanism 13 are respectively arranged on the mask material loading frame 11. The mask material loading mechanism 12 includes a mask material loading assembly 121, a mask material tensioning assembly 122 and a mask material guiding assembly 123 which are arranged in sequence. The integrating mechanism 13 is adjacent to the mask material guiding assembly 123. The mask material loading assembly 121 is configured for loading the mask material, the mask material tensioning assembly 122 receives and tensions the loaded mask material, and the mask material guiding assembly 123 receives the tensioned mask material and guides the material to the integrating mechanism 13 for loading and integrating. Through the cooperative arrangement of the mask material tensioning assembly 122 and the mask material guiding assembly 123, the loaded mask material is tensioned and then flattened and guided, thus increasing the flatness of the integrating mechanism 13 when loading and integrating, and ensuring the efficiency and quality of subsequent mask production. The mask material according to an embodiment of the disclosure may be gauze, non-woven fabric, filter paper, activated carbon filter paper and other filter mask materials.

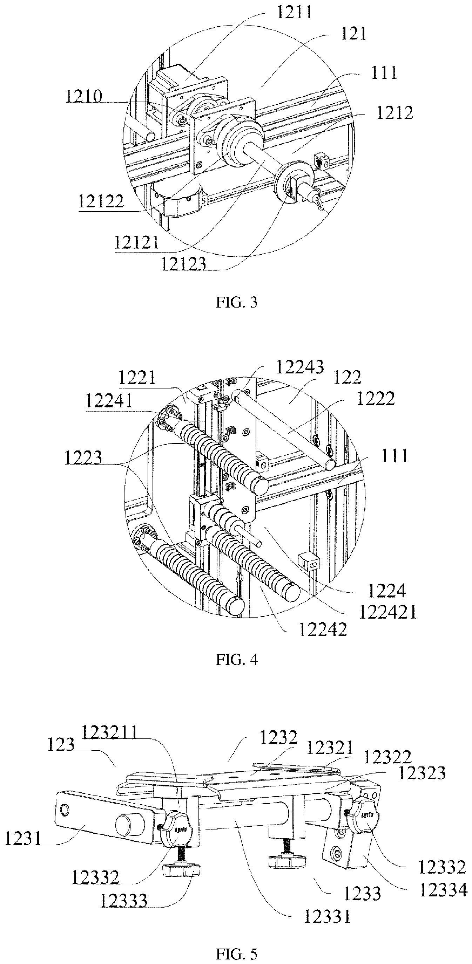

Continuously referring to FIG. 2 to FIG. 4, FIG. 3 is an enlarged view of a part A of FIG. 2 according to an embodiment of the disclosure, and FIG. 4 is an enlarged view of a part B of FIG. 2 according to an embodiment of the disclosure. Furthermore, the mask material loading frame 11 includes a frame body 111 and a frame baseplate 112. The frame body 111 is vertically installed on an upper surface of the frame baseplate 112. The frame body 111 is configured for mounting and supporting the mask material loading mechanism 12 and the integrating mechanism 13, and the frame baseplate 112 is configured for mounting and supporting the frame body 111. The frame body 111 according to an embodiment of the disclosure is a frame structure. The mask material loading assembly 121 includes a mask material loading driver 1211 and a mask material roll bearer 1212. An output end of the mask material loading driver 1211 is connected with the mask material roll bearer 1212, and drives the mask material roll bearer 1212 to rotate. A rolled mask material is sleeved on the mask material roll bearer 1212, and the mask material roll bearer 1212 is rotated to release and load the mask material. Specifically, the mask material loading assembly 121 further includes a mask material loading rack 1210. The mask material loading rack 1210 is arranged on a framework of the frame body 111. The mask material loading driver 1211 is arranged on a side of the mask material loading rack 1210 facing away from the mask material tensioning assembly 122. The mask material roll bearer 1212 includes a material scroll 12121, a scroll base 12122 and a scroll limiting part 12123. The scroll base 12122 is arranged on one side of the mask material loading rack 1210 homodromous with the mask material tensioning assembly 122. One end of the material scroll 12121 is rotatably connected onto the scroll base 12122, passes through the 12122, and then is connected with the output end of the mask material loading driver 1211 through a coupler. The scroll limiting part 12123 is sleeved on the other end of the material scroll 12121. The scroll limiting part 12123 is detachably connected with the material scroll 12121. The material scroll 12121 is vertical to the frame body 111. According to an embodiment of the disclosure, the mask material loading driver 1211 is a motor, the scroll base 12122 is a bearing, and the scroll limiting part 12123 is a shaft sleeve which is matched with a screw. When loading or changing materials, the scroll limiting part 12123 is removed; after the rolled mask material is sleeved on the material scroll 12121, the scroll limiting part 12123 is mounted.

The mask material tensioning assembly 122 includes a tensioning plate 1221, and a first tensioning deflector 1222, a second tensioning deflector 1223 and a tensioning member 1224 arranged on the tensioning plate 1221. The tensioning member 1224 is located between the first tensioning deflector 1222 and the second tensioning deflector 1223. The first tensioning deflector 1222 receives the loaded mask material and extends it deflectively to the tensioning member 1224. The tensioning member 1224 tensions the mask material and extends it deflectively to the second tensioning deflector 1223. The second tensioning deflector 1223 receives the tensioned mask material and extends it to the mask material guiding assembly 123. Specifically, the tensioning plate 1221 is arranged on the frame body 111 and parallel to the frame body 111. The first tensioning deflector 1222 is vertically arranged on a surface of the tensioning plate 1221 and located on an upper part of the tensioning plate 1221, and the first tensioning deflector 1222 is close to the mask material loading assembly 121. The second tensioning deflector 1223 is vertically arranged on the surface of the tensioning plate 1221 and located on the upper part of the tensioning plate 1221, and the second tensioning deflector 1223 is close to the mask material guiding assembly 123. According to an embodiment of the disclosure, the first tensioning deflector 1222 may be a rod or pipe with a smooth surface, or a roller, and the second tensioning deflector 1223 may be a rod or pipe with textures on the surface, or a roller with textures on the surface. The textures are arranged to increase a friction force against the mask material. The tensioning member 1224 include a tensioning drive part (not shown in the figure), a tensioning slide rail part 12241 and a tensioning part 12242. The tensioning slide rail part 12241 is arranged on the tensioning plate 1221, and the tensioning part 12242 is slidably connected to the tensioning slide rail part 12241. An output end of the tensioning drive part is connected with the tensioning part 12242, and drives the tensioning part 12242 to move. The tensioning part 12242 tensions the mask material. The tensioning drive part may be an air cylinder or a cooperation of a motor, a screw and a connecting block, and may be installed on one side of the tensioning plate 1221 facing away from the first tensioning deflector 1222 during specific setting. The tensioning slide rail part 12241 is arranged along the tensioning plate 1221, and an upper end of the tensioning slide rail part 12241 is located between the first tensioning deflector 1222 and the second tensioning deflector 1223. The tensioning part 12242 includes a sliding block and a tensioning rod 22421. The sliding block is slidably connected to the tensioning slide rail part 12241, and the tensioning rod 22421 is vertically connected onto the tensioning slide rail part 12241. The first tensioning deflector 1222, the tensioning rod 22421 and the second tensioning deflector 1223 are sequentially connected in a "V" shape. A structure of the tensioning rod 22421 is the same as that of the second tensioning deflector 1223, which will not be described here. In this way, the tensioning rod 22421 can be driven to move up and down by driving the sliding block to move up and down by the tensioning drive part, and the mask material can be tensioned. Preferably, the tensioning member 1224 further includes a tensioning detecting part 12243. The tensioning detecting part 12243 is arranged on the tensioning plate 1221 and located at one side of the tensioning slide rail part 12241, and the tensioning slide rail part 12241 is configured for detecting a moving position of the tensioning part 12242. The position of the tensioning part 12242 is tested by the setting of the tensioning detecting part 12243, so as to control a power of the tensioning drive part and further control a tensioning force. According to an embodiment of the disclosure, an existing position sensor may be employed as the tensioning detecting part 12243.

Continuously referring to FIG. 2 and FIG. 5, FIG. 5 is a schematic structural diagram of the mask material guiding assembly according to an embodiment of the disclosure. Furthermore, the mask material guiding assembly 123 includes a guiding frame 1231 and a guiding member 1232 arranged on the guiding frame 1231. Specifically, the guiding frame 1231 is a "U"-shaped frame with an open end. The guiding member 1232 includes a guiding plate 12321 and guiding limiting parts 12322 respectively arranged on two opposite sides of the guiding plate 12321. According to an embodiment of the disclosure, the guiding plate 12321 is a rectangular plate, the guiding limiting part 12322 is an arc-shaped plate with a bent structure, and the two guiding limiting parts 12322 are respectively bent above the guiding plate 12321. The two guiding limiting parts 12232 are matched with the guiding plate 12321 to form a "U"-shaped guide opening, and the tensioned mask material enters an upper surface of the guiding plate 12321 and moves under the limit of the two guiding limiting parts 12232, so that the mask material moves correctly and is more flat. Preferably, the guiding limiting part 12232 is integrally formed with the guiding plate 12321. Preferably, an incoming material sensor may be embedded in the guiding plate 12321, and is configured to sense whether the mask material is being guided, so as to facilitate production control. For example, an infrared sensor may be used. Preferably the guiding member 1232 further includes two feeding parts 12323. The two feeding parts 12323 are respectively arranged on the other two opposite sides of the guiding plate 12321, and are respectively adjacent to the two guiding limiting parts 12322. The feeding parts 12323 are located on the arc-shaped plates bent below the guiding plate 12321, and the two feeding parts 12323 are arranged so as to improve the smoothness of feeding and discharging when guiding the mask material. Preferably, the feeding part 12323 is integrally formed with the guiding plate 12321. Preferably, the mask material guiding assembly 123 further includes a guiding adjusting member 1233. The guiding member 1232 is connected to the guiding frame 1231 through the guiding adjusting member 1233, and the guiding adjusting member 1233 is configured for adjusting an angle of the guiding plate 12321 when guiding materials. By adjusting to the most suitable guiding angle, it is convenient to smooth the material guiding and further increase the flatness of the mask material. The guiding adjusting member 1233 includes a rotating shaft part 12331, a first knob adjusting part 12332 and a second knob adjusting part 12333. The rotating shaft part 12331 is rotatably connected to the guiding frame 1231, the first knob adjusting part 12332 is screwed to the guiding frame 1231, and a tail end of the first knob adjusting part 12332 abuts against the rotating shaft part 12331. The guiding member 1232 is connected to the rotating shaft part 12331 through the second knob adjusting part 12333. Specifically, the rotating shaft part 12331 is a rotating shaft, which is rotatably connected to an open end of the U-shaped structure of the guiding frame 1231. The first knob adjusting part 12332 includes two knob screws, and tail ends of the two knob screws are respectively screwed to an open end of the guiding frame 1231, and extend to abut against both ends of the rotating shaft part 12331. A lower surface of the guiding plate 12321 is provided with two connecting blocks 123211, and the two connecting blocks 123211 are sleeved on the rotating shaft part 12331 respectively, and form a rotary connection relationship with the rotating shaft part 12331. The second knob adjusting part 12333 also includes two knob screws, and tail ends of the two knob screws are respectively screwed to two connecting blocks 123211, and abut against the rotating shaft part 12331. Preferably, the guiding adjusting member 1233 further includes an adjusting handle 12334. The adjusting handle 12334 is vertically connected to an end of the rotating shaft 12331 that extends out of the guiding frame 1231. After the first knob adjusting part 12332 is loosened, the adjusting handle 12334 is rotated to drive the rotating shaft part 12331 to rotate, so that the material guiding angle of the guiding plate 12321 can be adjusted. Alternatively, the material guiding angle can also be adjusted by loosening the second knob adjusting part 12333 to directly rotate the guiding plate 12321. Alternatively, the above two ways are combined to adjust the angle. This arrangement is not only convenient for adjustment, but also convenient for disassembly.

Referring to FIG. 2 again, furthermore, the integrating mechanism 13 includes an integrating frame 131 and an integrating assembly 132 arranged on the integrating frame 131. The integrating assembly 132 includes a plurality of integrating members 1321, and the plurality of integrating members 1321 are sequentially arranged at intervals. Specifically, the integrating frame 131 is arranged on the frame body 111, and the plurality of integrating members 1321 are sequentially arranged on the integrating frame 131 at intervals along a width direction of the frame body 111, and each integrating member 1321 is perpendicular to the frame body 111. According to an embodiment of the disclosure, the integrating members 1321 are three rollers. The guided mask material enters from below the first integrating member 1321, extends above the second integrating member 1321, and then extends below the third integrating member 1321 to complete integrating.

According to an embodiment of the disclosure, a plurality of the mask material loading mechanisms 12 are provided, and the specific number may be set according to the actual requirements. The plurality of mask material loading mechanisms 12 and the integrating mechanism 13 are respectively arranged on the frame body 111. The mask material loading assembly 121, the mask material tensioning assembly 122 and the mask material guiding assembly 123 of each mask material loading mechanism 12 are sequentially arranged on the frame body 111 from the side far away from the integrating mechanism 13 to the side close to the integrating mechanism 13. The mask material loading assemblies 121 and the mask material tensioning assemblies 122 of the plurality of mask material loading mechanisms 12 may be flexibly arranged according to the structure of the frame body 111 to avoid interference with each other. For example, connecting lines of the mask material loading assemblies 121 and the mask material tensioning assemblies 122 are arranged in a fan-shaped layout. The mask material guiding assemblies 123 of the plurality of mask material loading mechanism 12 are arranged at intervals from top to bottom along a height direction of the frame body 111, so that the plurality of mask material guiding assemblies 123 are all adjacent to the integrating mechanism 13, so that the integrating mechanism 13 can integrate the mask materials guided out by the plurality of mask material guiding assemblies 123 uniformly. According to an embodiment of the disclosure, a number of the mask material loading mechanisms 12 is four, the sequential connecting lines of the four mask material loading assemblies 121 are formed as a rectangular shape, and the sequential connecting lines of the four mask material tensioning assemblies 122 are formed as a trapezoidal shape, so that it is convenient to save the installation space of each assembly of the mask material loading mechanism 12, thus reducing the occupied space of the mask material loading device. Preferably, the mask material loading device according to an embodiment of the disclosure further includes a control mechanism 14. The control mechanism 14 is provided with a plurality of controllers, a number of the controllers is the same as that of the mask material loading mechanisms 12, and each controller correspondingly controls the start and close of one mask material loading mechanism 12, so as to flexibly adjust the production of mask products with different filtering levels.

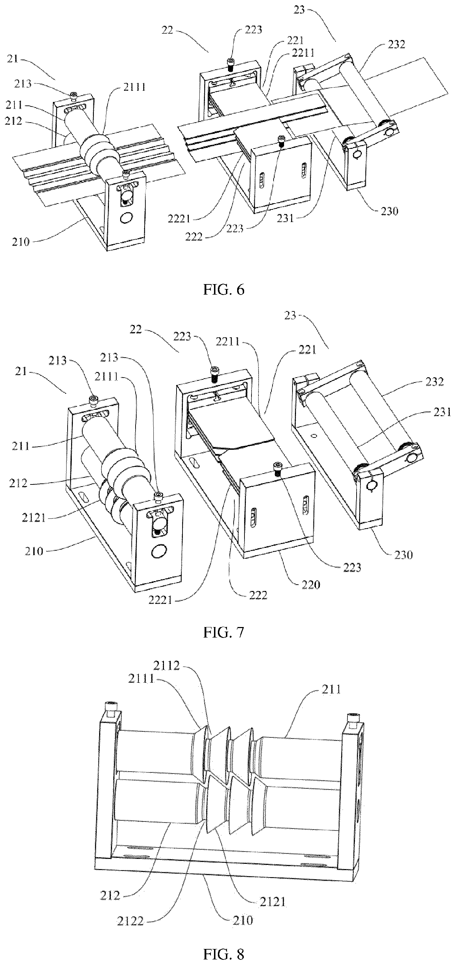

Continuously referring to FIG. 6 and FIG. 7, FIG. 6 is a structural diagram of the folding mechanism according to an embodiment of the disclosure, while FIG. 7 is another structural diagram of the folding mechanism according to an embodiment of the disclosure. Furthermore, the folding device 2 includes a creasing assembly 21, a folding assembly 22, and a folding discharging assembly 23. A feeding end of the creasing assembly 21 is adjacent to an integrating and loading end of the mask material loading device 1, that is, adjacent to the integrating mechanism 13. The folding assembly 22 is arranged at a discharge end of the creasing assembly 21, and the folding discharging assembly 23 is arranged at a discharge end of the folding assembly 22, so that the creasing assembly 21, the folding assembly 22, and the folding discharging assembly 23 are sequentially arranged. The mask material integrated by the integrating mechanism 13 enters from a feeding end of the creasing assembly 21, and sequentially passes through the creasing assembly 21, the folding assembly 22, and the folding discharging assembly 23. The creasing assembly 21 performs creasing on the mask material, and the folding assembly 22 folds the mask material subjected to the creasing. With the continuous conveying of the mask material, the folded mask material is output to the mask body forming device 4 by the folding discharging assembly 23.

Referring to FIG. 8, FIG. 8 is a schematic structural diagram of the creasing assembly according to an embodiment of the disclosure. Furthermore, the creasing assembly 21 includes a crease mounting base 210, a first creasing roller 211 and a second creasing roller 212. The first creasing roller 211 and the second creasing roller 212 are oppositely arranged on the crease mounting base 210, and a mask material channel is formed between the two. The first creasing roller 211 is provided with first bulges 2111, and a first recess 2112 is formed between every two adjacent first bulges 2111. The second creasing roller 212 is provided with second bulges 2121, and a second recess 2122 is formed between every two adjacent second bulges 2121. The first bulge 2111 corresponds to the second recess 2122, while the first recess 2112 corresponds to the second bulge 2121. When the mask material passes through the mask material channel, the first bulge 2111, the first recess 2112, the second bulge 2121 and the second recess 2122 cooperate with each other to press out creases on a surface of the mask material. With the continuous conveying of the mask material, the mask material with the creases reaches a station of the folding assembly 22 for folding. According to an embodiment of the disclosure, numbers of the first bulge 2111, the first recess 2112, the second bulge 2121 and the second recess 2122 are all three, so that three creases are respectively pressed on both sides of the mask material. Certainly, the numbers of the first bulge 2111, the first recess 2112, the second bulge 2121 and the second recess 2122 may be adaptively increased or decreased according to the actual requirements, and the above is only one embodiment of the disclosure, and should not be limited to this. Preferably, the first bulge 2111 and the second bulge 2121 are both frustum-shaped. When the mask material passes through the mask material channel, creases pressed out by the frustum-shaped first bulge 2111 and the frustum-shaped second bulge 2121 on both sides of the mask material are deeper, and are less likely to loosen during subsequent folding. Preferably, the creasing assembly 21 further includes a creasing roller adjuster 213, and the creasing roller adjuster 213 is connected with one or both of the first creasing roller 211 and the second creasing roller 212. According to an embodiment of the disclosure, it is taken as an example that the creasing roller adjuster 213 is connected with the first creasing roller 211. The creasing roller adjuster 213 is an adjusting screw, one end of the adjusting screw passes through the crease mounting base 210 and is connected to one end of the first creasing roller 211. In practical application, two creasing roller adjusters 213 are provided, and the two creasing roller adjusters 213 are respectively connected with both ends of the first creasing roller 211, so that a height of the first creasing roller 211 can be adjusted by rotating the creasing roller adjuster 213, such that a width of the mask material channel can be adjusted, so that the creasing assembly 21 can perform creasing on mask materials with different thicknesses, and is convenient for installation and debugging at the same time. The connection of the creasing roller adjuster 213 to the second creasing roller 212 is the same as that described above, and will not be repeated here. When the creasing roller adjuster 213 is connected with both of the first creasing roller 211 and the second creasing roller 212, the first creasing roller 211 and the second creasing roller 212 can be adjusted at the same time, so that the application range is wider.

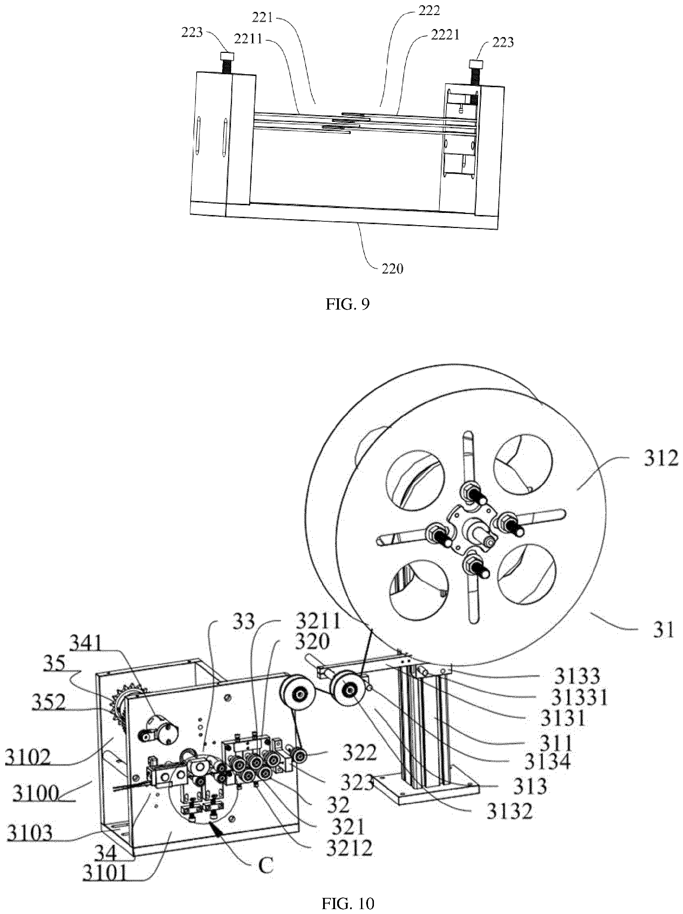

Referring to FIG. 9, FIG. 9 is a schematic structural diagram of the folding assembly according to an embodiment of the disclosure. Furthermore, the folding assembly 22 includes a folding mounting base 220, a first folding member 221 and a second folding member 222. The first folding member 221 and the second folding member 222 are arranged on the folding mounting base 220 in a staggered manner. The first folding member 221 includes a first folding plate 2211, and the second folding member 222 includes a second folding plate 2221. The first folding plate 2211 and the second folding plate 2221 are alternately staggered. According to an embodiment of the disclosure, numbers of the first folding plate 2211 and the second folding plate 2221 are both three, and the three first folding plates 2211 and the three second folding plates 2221 are all arranged on the folding mounting base 220. Lengths of the three first folding plates 2211 gradually increase from bottom to top, and lengths of the three second folding plates 2221 gradually decrease from bottom to top. One second folding plate 2221 is arranged between every two adjacent first folding plates 2211, and one first folding plate 2211 is arranged between every two adjacent second folding plates 2221. With this arrangement, each folding plate corresponds to a respective one of the creases pressed out by the creasing assembly 21, so that the mask material can be fully folded to prevent the mask material from loosening. Certainly, the numbers of the first folding plate 2211 and the second folding plate 2221 may be adaptively increased or decreased according to the actual needs. The above is only one embodiment of the disclosure and should not be limited to this. Preferably, both the first folding member 221 and the second folding member 222 include a folding plate adjuster 223. The folding plate adjuster 223 is an adjusting screw, and the folding plate adjuster 223 connects the first folding plate 2211 with the second folding plate 2221. In specific application, two folding plate adjusters 223 are provided, and the two creasing roller adjuster 213 are connected to the first folding member 221 and the second folding member 222 respectively. In this way, an interval between the first folding plate 2211 and the second folding plate 2221 may be adjusted by rotating the folding plate adjusters 223, so that the folding assembly 22 can fold mask materials with different thicknesses, and is convenient for installation and debugging at the same time. In specific application, the folding discharging assembly 23 includes a folding and discharging mounting base 230, a first discharging roller 231 and a second discharging roller 232. The first discharging roller 231 and the second discharging roller 232 are arranged on the mounting base in parallel, and the mask material is wound through the first discharging roller 231 and the second discharging roller 232 in sequence. It should be noted that the first discharging roller 231 and the second discharging roller 232 are not in the same horizontal plane, so that the mask material can be tensioned to prevent the folded crease from loosening during discharging. The folding discharging assembly 23 is adjacent to the mask body forming device 4.

In this way, the mask material subjected to the creasing can be folded by the first folding member and the second folding member, so that a deviation caused by loosening of creases in the conveying process is effectively avoided, and a possibility of crooked creases on a surface of the mask is reduced, and meanwhile, a folding error is avoided, and production quality of products is guaranteed.

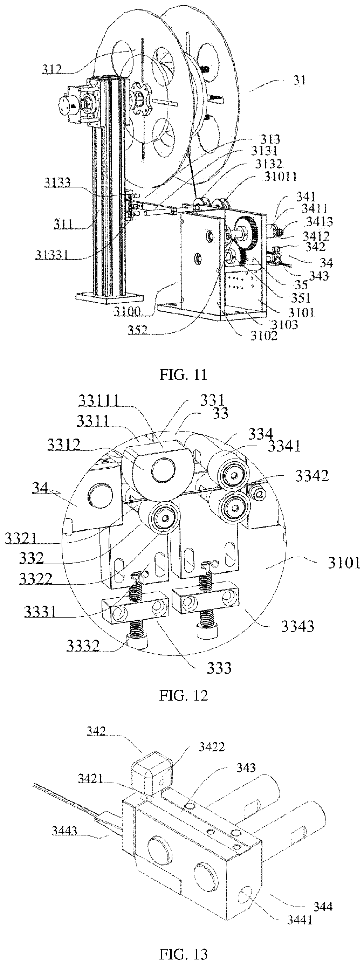

Continuously referring to FIG. 10 and FIG. 11, FIG. 10 is a structural schematic diagram of the nose wire loading device according to an embodiment of the disclosure, and FIG. 11 is another structural schematic diagram of the nose wire loading device according to an embodiment of the disclosure. Furthermore, the nose wire loading device 3 includes a nose wire loading mechanism 31, a nose wire straightening mechanism 32, a nose wire fixed-length conveying mechanism 33, a nose wire fixed-length cutting mechanism 34 and a synchronous transmission mechanism 35. The nose wire loading mechanism 31, the nose wire straightening mechanism 32, the nose wire fixed-length conveying mechanism 33 and the nose wire fixed-length cutting mechanism 34 are arranged in sequence. The synchronous transmission mechanism 35 is connected with the nose wire fixed-length conveying mechanism 33 and the nose wire fixed-length cutting mechanism 34 respectively. The nose wire loading mechanism 31 is configured for loading the nose wire, the nose wire straightening mechanism 32 receives and straightens the loaded nose wire, the nose wire fixed-length conveying mechanism 33 receives the straightened nose wire and conveys the nose wire with fixed-length to the nose wire fixed-length cutting mechanism 34, the nose wire fixed-length cutting mechanism 34 performs fixed-length cutting on the fixed-length conveyed nose wire, and the synchronous transmission mechanism 35 synchronizes the conveying of the nose wire fixed-length conveying mechanism 33 with the cutting of the nose wire fixed-length cutting mechanism 34. The cooperative arrangement of the nose wire loading mechanism 31, the nose wire straightening mechanism 32, the nose wire fixed-length conveying mechanism 33, the fixed-length cutting mechanism 34 and the synchronous transmission mechanism 35 smoothly realizes the procedures of loading, straightening and fixed-length cutting of the nose wire, and ensures the consistency of fixed-length cutting, thus ensuring the quality of subsequent mask production.

Referring to FIG. 10 and FIG. 11, furthermore, the nose wire loading mechanism 31 includes a nose frame 311 and a rolled material loading assembly 312 arranged on the nose frame 311. The rolled material loading assembly 312 is configured for loading the nose wire. A rolled nose wire is sleeved on the rolled material loading assembly 312, and the rolled material loading assembly 312 releases the nose wire for material loading. According to an embodiment of the disclosure, the existing unwinding mechanism may be used as the rolled material loading assembly 312, which will not be described here. Preferably, the nose wire loading mechanism 31 further includes a nose wire passing-tensioning assembly 313. The nose wire passing-tensioning assembly 313 includes a tensioning member 3131 and a wire passing member 3132. The tensioning member 3131 is located below the rolled material loading assembly 312. One end of the tensioning member 3131 is rotatably connected with the nose frame 311, and the other end of the tensioning member extends to the nose wire straightening mechanism 32. The wire passing member 3132 is rotatably connected to the other end of the tensioning member 3131. The nose wire loaded by the rolled material loading assembly 312 is wound around the wire passing member 3132 first and then extended to the nose wire straightening mechanism 32. The tensioning member 3131 is swung to tension the nose wire. Specifically, the nose wire passing-tensioning assembly 313 further includes a passing-tensioning mounting plate 3133. The passing-tensioning mounting plate 3133 is installed on the nose frame 311 and located below the rolled material loading assembly 312, and upper and lower sides of the passing-tensioning mounting plate 3133 are vertically provided with limiting rods 31331 respectively. The tensioning member 3131 is rotatably connected to the passing-tensioning mounting plate 3133, and is located between the two limiting rods 31331. The two limiting rods 31331 limit a swing angle of the tensioning member 3131, which can prevent excessive swing from interfering with the rolled material loading assembly 312. The wire passing member 3132 is a roller wheel, which is rotatably connected to one end of the tensioning member 3131 far away from a tensioning mounting plate 133 through a rotating shaft, and the loaded nose wire is wound from below the wire passing member 3132 and then continues to extend toward the nose wire straightening mechanism 32. Preferably, the nose wire passing-tensioning assembly 313 further includes a stop lever 3134. The stop lever 3134 is arranged on the rotating shaft through a connecting block. The stop lever 3134 is located on one side close to the nose frame 311 and adjacent to the wire passing member 3132. The nose wire passes between the wire passing member 3132 and the stop lever 3134, so that the stop lever 3134 can support and stop the nose wire wound around the wire passing member 3132, and prevent the nose wire from loosening and falling down.

The nose wire straightening mechanism 32 includes a straightening mounting plate 320 and a straightening assembly 321 arranged on the straightening mounting plate 320. The straightening assembly 321 includes a plurality of upper straightening members 3211 arranged side by side and a plurality of lower straightening members 3212 arranged side by side. The plurality of upper straightening members 3211 arranged side by side are located above the plurality of lower straightening members 3212 arranged side by side, and straightening gaps are provided between the plurality of upper straightening members 3211 arranged side by side and the plurality of lower straightening members 3212 arranged side by side, and the loaded nose wire passes through the straightening gaps for straightening. Specifically, the mask nose wire loading device according to an embodiment of the disclosure further includes a nose wire mounting frame 3100. The nose wire straightening mechanism 32, the nose wire fixed-length conveying mechanism 33, the nose wire fixed-length cutting mechanism 34 and the synchronous transmission mechanism 35 are mounted on the nose wire mounting frame 3100. The nose wire mounting frame 3100 includes a front plate 3101, a rear plate 3102 and a bottom plate 3103. The front plate 3101 and the rear plate 3102 are respectively and vertically mounted on the bottom plate 3103, and the front plate 3101 and the rear plate 3102 are spaced apart and parallel. The straightening mounting plate 320 is arranged on one side of the front plate 3101 of the nose wire mounting frame 3100 facing away from the rear plate 3102. According to an embodiment of the disclosure, the upper straightening member 3211 and the lower straightening member 3212 are all roller wheels, and each upper straightening member 3211 and each lower straightening member 3212 are rotatably connected to the straightening mounting plate 320 through a rotating shaft, wherein a number of the upper straightening members 3211 is three, and the three upper straightening members 3211 are sequentially arranged at intervals along a length direction of the straightening mounting plate 320, and center points of the three upper straightening members 3211 are on a straight line. A number of the lower straightening members 3212 is two, and the two lower straightening members 3212 are located below the three upper straightening members 3211, and are respectively aligned with the intervals between two adjacent upper straightening members 3211, so that the upper straightening members 3211 and the lower straightening members 3212 are arranged in a staggered manner, center points of the two lower straightening members 3212 are on a straight line, and the nose wire passes through the straightening gaps to complete straightening.

Preferably, the nose wire straightening mechanism 32 further includes a straightening transition assembly 322 and a straightening guiding assembly 323. The straightening transition assembly 322 is located at one side of the straightening assembly 321 close to the nose wire loading mechanism 31, and the straightening guiding assembly 323 is located between the straightening assembly 321 and the straightening transition assembly 322. The loaded nose wire is first deflected by the straightening transition assembly 322, then passes through the straightening guiding assembly 323 for guiding, and then extends towards straightly and passes through the straightening gaps for straightening. Specifically, the straightening transition assembly 322 is a transition roller, which is vertically arranged on the front plate 3101. The loaded nose wire passes through the straightening transition assembly 322 for transition and deflecting, so as to facilitate the guiding of the straightening guiding assembly 323. Preferably, the front plate 3101 is further provided with an idler 31011, the idler 31011 is located above the straightening transition assembly 322 and close to the wire passing member 3132. The idler 31011 is configured to transition the nose wire to the straightening transition assembly 322, and is convenient to support the nose wire when swinging the tensioning member 3131. The straightening guiding assembly 323 is plate-shaped, vertically arranged on the front plate 3101, and facing the straightening assembly 321. A shaping guiding assembly 23 is provided with a wire guide, which is on the same straight line as the straightening gap. The nose wire after being transitioned by the straightening transition assembly 322, can be directly inserted into the straightening gap between the upper straightening member 3211 and the lower straightening member 3212 through the wire guide. Preferably, the wire guide 3231 is funnel-shaped, with one end which has a larger face facing the straightening transition assembly 322, and the other end which has a smaller face facing the straightening gap, so as to facilitate the passage of the nose wire.

Continuously referring to FIG. 10 and FIG. 12, FIG. 12 is an enlarged view of a part C of FIG. 11 according to an embodiment of the disclosure. Furthermore, the nose wire fixed-length conveying mechanism 33 includes a conveying driving assembly 331 and a conveying driven assembly 332. The conveying driving assembly 331 is arranged opposite to the conveying driven assembly 332. The straightened nose wire passes between the conveying driving assembly 331 and the conveying driven assembly 332 which are opposite, and is respectively attached to the conveying driving assembly 331 and the conveying driven assembly 332, and the conveying driving assembly 331 is matched with the conveying driven assembly 332 to convey the nose wire in a fixed-length manner. The conveying driving assembly 331 includes a conveying spindle 3311 and a conveying member 3312, the conveying member 3312 is provided with a conveying notch 33111, and the conveying member 3312 is sleeved on the conveying spindle 3311. The conveying driven assembly 332 includes a conveying auxiliary shaft 3321 and a follower 3322, and the follower 3322 is sleeved on the conveying auxiliary shaft 3321. The conveying member 3312 is arranged opposite to the follower 3322. The straightened nose wire passes between the conveying member 3312 and the follower 3322 which are opposite, and the conveying member 3312 is matched with the follower 3322 to convey the nose wire. When the conveying notch 33111 of the conveying member 3312 is arranged opposite to the follower 3222, the nose wire is not conveyed, thus realizing fixed-length conveying. Specifically, the conveying spindle 3311 vertically passes through the front plate 3101 and is rotatably connected with the front plate 3101. The conveying member 3312 is located at one side of the straightening assembly 321 and sleeved on an end of a transmission spindle 211. The conveying notch 33111 is transverse to a plane of the conveying member 3312, so that a longitudinal section of the conveying member 3312 is semicircular. The conveying auxiliary shaft 3321 is vertically arranged on the front plate 3101, and is located just below the conveying spindle 3311. The follower 3322 is sleeved on the conveying auxiliary shaft 3321 and faces the conveying member 3312. A longitudinal section of the follower 3322 is circular. A gap is provided between the follower 3322 and the conveying auxiliary shaft 3321. When the nose wire passes through the gap between the follower 3322 and the conveying auxiliary shaft 3321, the follower 3322 is matched with the conveying auxiliary shaft 3321 to press the nose wire. The conveying spindle 3311 is rotated, such that the conveying member 3312 is rotated, which drives the follower 3322 to rotate synchronously, and conveys the nose wire. When the conveying notch 33111 of the conveying member 3312 is rotated to be opposite to the follower 3322, the pressing state of the follower 3322 and the conveying auxiliary shaft 3321 on the nose wire disappears, and the conveying state disappears on the nose wire, and the nose wire is not conveyed, and the conveying state continues until the follower 3322 and the conveying auxiliary shaft 3321 press the nose wire again, thus realizing fixed-length conveying of the nose wire. The fixed length of the nose wire conveyed is a perimeter of the conveying member 3312 except the notch 33111. In specific application, the fixed length may be designed by designing a size of the notch 33111 or a size of the conveying member 3312. Preferably, the nose wire fixed-length conveying mechanism 33 further includes a driven adjusting assembly 333. The driven adjusting assembly 333 is arranged on the front plate 3101, and the conveying driven assembly 332 is arranged on the driven adjusting assembly 333. A distance between the conveying driven assembly 332 and the conveying driving assembly 331 is adjusted by the driven adjusting assembly 333, so that the conveying of nose wires with different diameters can be adapted and compatible. Specifically, the driven adjusting assembly 333 includes an adjusting plate 3331 and an adjuster 3332. The adjusting plate 3331 is located directly below the conveying spindle 3311, and is slidably connected with the front plate 3101. The conveying auxiliary shaft 3321 is vertically arranged on the adjusting plate 3331, and the adjuster 3332 includes a screw block and a screw stem fitted with the screw block. The screw block of the adjuster 3332 is installed on the front plate 3101 and located below the adjusting plate 3331. The screw stem of the adjuster 3332 passes through the screw block of the adjuster 3332 from below to abut against the adjusting plate 3331. The screw block of the adjuster 3332 is screwed with the screw stem. A distance between the adjusting plate 3331 and the conveying spindle 3311 can be adjusted by adjusting a depth of the screw stem screwed to the screw block, so that the gap between the conveying member 3312 and the follower 3322 can be adjusted. Preferably, the nose wire fixed-length conveying mechanism 33 further includes a conveying transition assembly 334. The conveying transition assembly 334 is located between the conveying driving assembly 331 and the straightening assembly 321. The straightened nose wire is transitioned through the conveying transition assembly 334 first, and then enters between the conveying driving assembly 331 and the conveying driven assembly 332, so as to facilitate the smoothness of positioning and conveying. According to an embodiment of the disclosure, the conveying transition assembly 334 includes an upper transition member 3341 and a lower transition member 3342. The upper transition member 3341 and the lower transition member 3342 are respectively arranged on the front plate 3101, the upper transition member 3341 is located above the lower transition member 3342, and an interval between the upper transition member 341 and the lower transition member 3342 is arranged opposite to an interval between the conveying driving assembly 331 and the conveying driven assembly 332. Structures and principles of the upper transition member 3341 and the lower transition member 3342 according to an embodiment of the disclosure are the same as those of the conveying driven assembly 332, and will not be described here. Preferably, the conveying transition assembly 334 further includes a conveying transition adjuster 343. The lower transition member 3342 is arranged on the front plate 3101 through the conveying transition adjuster 343, and the conveying transition adjuster 343 is configured to adjust a distance between the lower transition member 3342 and the upper transition member 3341. Structures and principles of the conveying transition adjuster 343 according to an embodiment of the disclosure are the same as those of the driven adjusting assembly 333, and will not be described here.

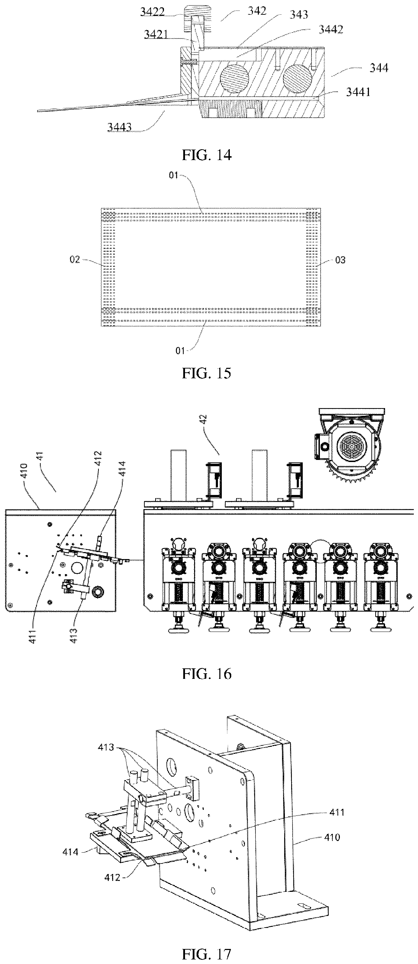

Continuously referring to FIG. 10 to FIG. 14, FIG. 13 is a schematic structural diagram of the fixed-length cutting mechanism according to an embodiment of the disclosure, and FIG. 14 is a cross sectional view of the fixed-length cutting mechanism according to an embodiment of the disclosure. Furthermore, the fixed-length cutting mechanism 34 includes a fixed-length cutting driving assembly 341, a cutting assembly 342, a cutting reset assembly 343 and a guiding assembly 344. The cutting reset assembly 343 is arranged on the guiding assembly 344 and connected with the cutting assembly 342. A cutting end of the cutting assembly 342 faces an outlet end of the guiding assembly 344. The fixed-length cutting driving assembly 341 is arranged opposite to the cutting assembly 342. The conveyed nose wire enters from an inlet end of the guiding assembly 344 and is guided, and then is led out from the outlet end of the guiding assembly 344. The fixed-length cutting driving assembly 341 acts on the cutting assembly 342 at intervals, the cutting assembly 342 acts on the led nose wire at intervals to perform fixed-length cutting, and the cutting reset assembly 343 resets the cutting assembly 342 after cutting. The fixed-length cutting driving assembly 341 includes a cutting driving shaft 3411, a power frame 3412 arranged on the cutting driving shaft 3411, and a power member 3413 rotatably connected to the power frame 3412. Rotating the cutting driving shaft 3411 drives the power member 3413 to rotate, and the power member 3413 acts on the cutting assembly 342 at intervals. Specifically, the cutting driving shaft 3411 penetrates through the front plate 3101. One end of the power frame 3412 is vertically arranged at an end of the cutting driving shaft 3411, and the power member 3413 is rotatably connected to the other end of the power frame 3412. According to an embodiment of the disclosure, the power member 3413 is a roller wheel. The cutting driving shaft 3411 is rotated so that the power member 3413 rotates around the cutting driving shaft 3411. The guiding assembly 344 is mounted on the front plate 3101 by two mounting rods. The guiding assembly 344 is located below the cutting driving shaft 3411 and adjacent to the nose wire fixed-length conveying mechanism 33. According to an embodiment of the disclosure, the guiding assembly 344 is a rectangular block, and is provided with a guide hole 3441 along a length direction thereof. The guide hole 3441 is opposite to an interval between the conveying member 3312 and the follower 3322, and the fixed-length conveyed nose wire through the cooperation of the conveying member 3312 and the follower 3322 enters the guide hole 3441 for guiding. Preferably, one end of the guide hole 3441 facing the interval between the conveying member 3312 and the follower 3322 is funnel-shaped, that is, an inlet end of the guide hole 3441 is funnel-shaped, which is convenient for the nose wire to enter the guide hole 3441. The other end of the guide hole 3441 is an outlet end. An upper part of the guiding assembly 344 is provided with a cavity 3442. The cavity 3442 is located at one side of the guiding assembly 344 away from the nose wire fixed-length conveying mechanism 33, and is specifically a strip-shaped cavity formed by the depression in an upper surface of the guiding assembly 344. One end of the cutting reset assembly 343 is connected with an upper surface of the guiding assembly 344, and the other end extends above the cavity 3442. According to an embodiment of the disclosure, the cutting reset assembly 343 is an elastic sheet. The cutting assembly 342 includes a cutter 3421 and a cutter stress part 3422. A lower end of the cutter 3421 faces an outlet end of the guide hole 3441, the cutter stress part 3422 is sleeved on an upper end of the cutter 3421 and faces the cutting driving shaft 3411. The cutter 3421 is adjacent to the cavity 3442, and the other end of the cutting reset assembly 343 is connected with the cutter 3421. The power member 3413 rotates around the cutting driving shaft 3411, and may roll to the cutter stress part 3422 only when rotating to below the cutting driving shaft 3411, and then act on the cutter stress part 3422 to press down the cutter 3421, so that the cutter 3421 cuts off the nose wire led out from the outlet end of the guide hole 3441 and deforms the cutting reset assembly 343. When the rotating power member 3413 does not act on the cutter stress part 3422, the cutting reset assembly 343 resets and makes the cutter 3421 reset. In this way, with the fixed-length conveying of the nose wire, the fixed-length cutting of the nose wire is synchronously realized, and the length of the fixed-length cutting is a length of one revolution of the power member 3413. In specific application, the setting of the rotating perimeter of the power member 3413 is matched with the setting of the perimeter of the conveying member 3312 3312 except the notch 3121. The roller wheel-shaped power member 3413 is also convenient to act on the abrasion of the cutter stress part 3422, which is convenient for smooth cutting operation. Preferably, the guiding assembly 344 is further provided with an inclined outlet part 3443. The inclined outlet part 3443 is located at one side of the guiding assembly 344 far away from the nose wire fixed-length conveying mechanism 33 and communicates with the outlet end of the guide hole 3441. According to an embodiment of the disclosure, the inclined outlet part 3443 include two cooperative inclined elastic sheets, and the two elastic sheets are arranged up and down. The lower inclined elastic sheet is connected with a lower surface of the guiding assembly 344, and the upper inclined elastic sheet is connected with the guiding assembly 344 through a mounting block, and avoids the cutter 3421. The two inclined elastic sheets are inclined in a direction away from the lower surface of the guiding assembly 344, and tail ends of the two inclined elastic sheets are adjacent or attached. The two inclined elastic sheets can clamp the nose wire penetrating out of the guide hole 3441 to a certain extent, so as to facilitate the cutting of the cutting assembly 342 without restricting the movement of the nose wire. Meanwhile, the downwardly inclined angle of the inclined outlet part 3443 is also convenient for the cut nose wire to fall into the semi-finished product of the mask, so as to facilitate the shaping of the mask body.

Referring to FIG. 10 and FIG. 11 again, furthermore, the synchronous transmission mechanism 35 includes a driving assembly (not shown in the drawing) as well as a first synchronous transmission assembly 351 and a second synchronous transmission assembly 352. An output end of the driving assembly is connected with the first synchronous transmission assembly 351 or the second synchronous transmission assembly 352. The first synchronous transmission assembly 351 is meshed with the second synchronous transmission assembly 352. The first synchronous transmission assembly 351 and the second synchronous transmission assembly 352 are respectively connected with the nose wire fixed-length conveying mechanism 33 and the fixed-length cutting mechanism 34. The driving assembly drives the first synchronous transmission assembly 351 or the second synchronous transmission assembly 352, and the first synchronous transmission assembly 351 and the second synchronous transmission assembly 352 synchronously drive the nose wire fixed-length conveying mechanism 33 to convey and the fixed-length cutting mechanism 34 to cut respectively. Specifically, the driving assembly according to an embodiment of the disclosure is a motor, which is mounted on one side of the rear plate 3102 facing away from the front plate 3101. The first synchronous transmission assembly 351 and the second synchronous transmission assembly 352 are located between the front plate 3101 and the rear plate 3102 respectively. The first synchronous transmission assembly 351 and the second synchronous transmission assembly 352 are both in the form of a gear shaft and a gear cooperatively sleeved on the gear shaft. The gear of the first synchronous transmission assembly 351 meshes with the gear of the second synchronous transmission assembly 352. The first synchronous transmission assembly 351 and the second synchronous transmission assembly 352 are rotatably connected between the front plate 3101 and the rear plate 3102 respectively, wherein the gear shaft of the first synchronous transmission assembly 351 is coaxially connected with the conveying spindle 3311, and the gear shaft of the second synchronous transmission assembly 352 is coaxially connected with the cutting driving shaft 3411. In this way, when the output end of the driving assembly is connected with the gear shaft of the first synchronous transmission assembly 351 or the gear shaft of the second synchronous transmission assembly 352, the conveying spindle 3311 and the cutting driving shaft 3411 can be synchronously driven to rotate, thus realizing the synchronization of the nose wire cutting of the conveyor.

Continuously referring to FIG. 15 and FIG. 16, FIG. 15 is a schematic structural diagram of an individual mask body, and FIG. 16 is a schematic structural diagram of the mask body forming device according to an embodiment of the disclosure. Furthermore, the mask body forming device includes a shaping mechanism 41 and a molding mechanism 42. The shaping mechanism 41 is arranged opposite to the folding device 2 and the nose wire loading device 3 respectively, receives the semi-finished product of the mask body and the nose wire, and then shapes and feeds the same into the molding mechanism 42. The molding mechanism 42 includes a molding conveying assembly 421, a side-edge welding assembly 422, and a front-rear edge welding assembly 423. The shaping mechanism 41, the side-edge welding assembly 422 and the front-rear edge welding assembly 423 are all located on a conveying path of the molding conveying assembly 421. After the semi-finished product of the mask body shaped by the shaping mechanism 41 reaches a station of the molding mechanism 42, the molding conveying assembly 421 conveys the semi-finished product of the mask body to stations of the side-edge welding assembly 422 and the front-rear edge welding assembly 423 for welding the two side edges and the front and rear edges, so as to form a continuous mask body. Preferably, the molding mechanism 42 further includes a body cutting assembly 424. The body cutting assembly 424 is located on the conveying path of the conveying assembly 421, and the body cutting assembly 424 is configured for cutting the continuous mask body to form individual mask bodies, so that the mask overturning and conveying device 5 can receive the individual mask bodies one by one and carry out overturning and conveying.

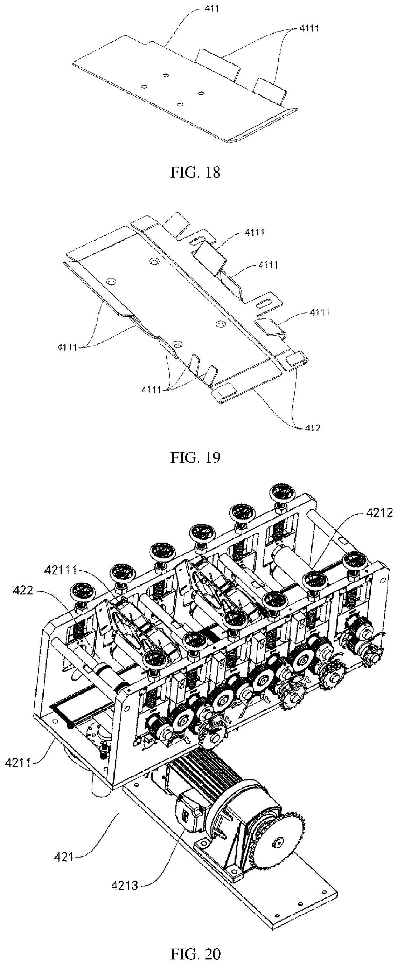

Referring to FIG. 17 to FIG. 19, FIG. 17 is a schematic structural diagram of the shaping mechanism according to an embodiment of the disclosure; FIG. 18 is a schematic structure diagram of a first shaping plate according to an embodiment of the disclosure; and FIG. 19 is a schematic structure diagram of a second shaping plate according to an embodiment of the disclosure. The shaping mechanism 41 includes a shaping mounting base 410, a first shaping plate 411 and a second shaping plate 412. The first shaping plate 411 is arranged on the shaping mounting base 410 through a connecting rod 413. The second shaping plate 412 is arranged on the shaping mounting base 410 through a mounting block 414, and the second shaping plate 412 faces the first shaping plate 411. A gap is provided between the first shaping plate 411 and the second shaping plate 412. In specific application, the first shaping plate 411 and the second shaping plate 412 both have a bending part 4111, and the semi-finished product of the mask body passes through the gap. The bending parts 4111 bend two side edges 01 of the semi-finished product of the mask body, so as to facilitate welding the two side edges 01 of the semi-finished product of the mask body subsequently.

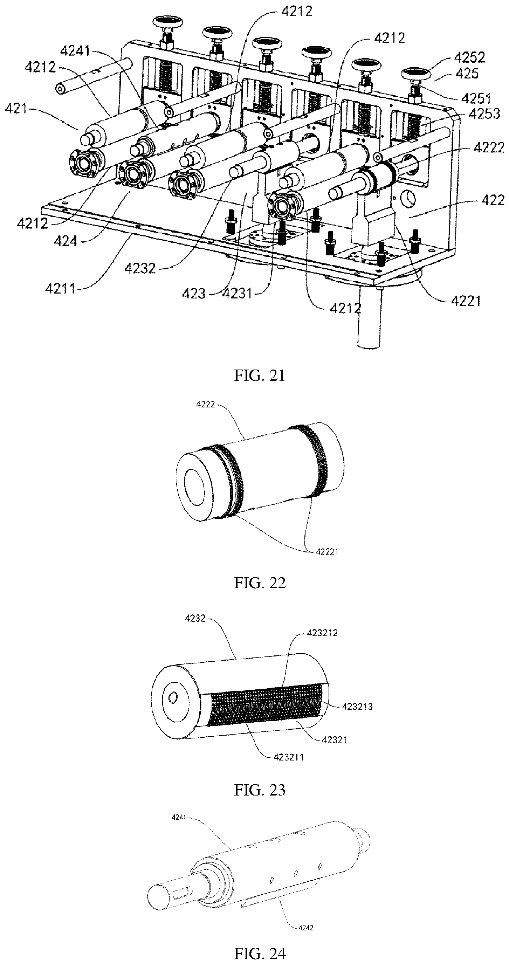

Referring to FIG. 20 and FIG. 21, FIG. 20 is a schematic structural diagram of the molding mechanism according to an embodiment of the disclosure; and FIG. 21 is another schematic structure diagram of the molding mechanism according to an embodiment of the disclosure. The molding mechanism 42 includes a molding conveying assembly 421, a side-edge welding assembly 422, a front-rear edge welding assembly 423 and a body cutting assembly 424. The side-edge welding assembly 422, the front-rear edge welding assembly 423 and the body cutting assembly 424 are all located on the conveying path of the molding conveying assembly 421. Further, the molding conveying assembly 421 includes a molding mounting plate 4211, a conveying roller 4212 and a conveying driving member 4213. The conveying roller 4212 is rotatably arranged on the molding mounting plate 4211, and a number of the conveying roller 4212 is six. The six conveying rollers 4212 are grouped in pairs, and the two conveying rollers 4212 in each group are opposite to each other. One of the six conveying rollers 4212 is connected with an output end of the conveying driving member 4213, and the other five conveying rollers 4212 are connected with one conveying roller 4212 or the output end of the conveying driving member 4213 through gears or chains, so that the six conveying rollers 4212 share one conveying driving member 4213 to ensure the consistency of conveying. Specifically, the conveying driving member 4213 is a motor. In specific application, one end of the semi-finished product of the mask body passes between the two opposite conveying rollers 4212 in each group, and the conveying driving member 4213 drives the conveying rollers 4212 to rotate, so that the semi-finished product of the mask body is sequentially conveyed to stations of the side-edge welding assembly 422, the front-rear edge welding assembly 423 and the body cutting assembly 424 for processing. Certainly, the number of the conveying roller 4212 may be adaptively increased or decreased according to the actual needs. The above is only one embodiment of the disclosure and should not be limited to this.

Referring to FIG. 22, FIG. 22 is a schematic structural diagram of a side-edge pressure roller according to an embodiment of the disclosure. The side-edge welding assembly 422 includes a side-edge welding head 4221 and a side-edge pressure roller 4222. The side-edge pressure roller 4222 is rotatably arranged on the molding mounting plate 4211, and the side-edge pressure roller 4222 is connected with the output end of the conveying driving member 4213 through a transmission member such as a gear or a chain, so as to share the conveying driving member 4213 with the conveying roller 4212, and ensure the consistency of conveying. The side-edge welding head 4221 is arranged below the side-edge pressure roller 4222. In specific application, the side-edge pressure roller 4222 is provided with a side-edge pressing bump 4221. When the semi-finished product of the mask body passes between the side-edge welding head 4221 and the side-edge pressure roller 4222, the side-edge pressing bump 42221 presses the two side edges 01 of the semi-finished product of the mask body, and the two side edges 01 of the mask body are formed by welding with the side-edge welding head 4221 on the semi-finished product of the mask body. It should be noted that the side-edge pressing bump 42221 is arranged around the side-edge pressure roller 4222, so that when the side-edge pressure roller 4222 rotates, two continuous side edges 01 can be formed by welding on the semi-finished product of the mask body.

Referring to FIG. 23, FIG. 23 is a schematic structural diagram of a front-rear edge pressure roller 232 according to an embodiment of the disclosure. The front-rear edge welding assembly 423 includes a front-rear edge welding head 4231 and a front-rear edge pressure roller 4232. The front-rear edge pressure roller 4232 is rotatably arranged on the molding mounting plate 4211, and the front-rear edge pressure roller 4232 is connected with the output end of the conveying driving member 4213 through a transmission member such as agear or a chain, so as to share the conveying driving member 4213 with the conveying roller 4212, and ensure the consistency of conveying. The front-rear edge welding head 4231 is arranged below the front-rear edge pressure roller 4232. In specific application, the front-rear edge pressure roller 4232 is provided with a front-rear edge pressing bump 42321. When the semi-finished product of the mask body passes between the front-rear edge welding head 4231 and the front-rear edge pressure roller 4232, the front-rear edge pressing bump 42321 and the front-rear edge welding head 4231 work cooperatively to form a front edge 02 and a rear edge 03 of the mask body by welding on the semi-finished product of the mask body. The front edge 02, the rear edge 03 and the two side edges 01 enclose the mask body. It should be noted that a perimeter of the front-rear edge pressure roller 4232 is equal to a distance between the front edge 02 and the rear edge 03 of the mask body. In this way, the front edge 02 or the rear edge 03 is formed by welding on the semi-finished product of the mask body every time the front-rear edge pressure roller 4232 rotates for one circle, so that the continuous mask body is formed from the semi-finished product of the mask body. In specific application, two front-rear edge pressing bumps 42321 are provided, and the two front-rear edge pressing bumps 42321 are a front-edge pressing bump 423211 and a rear-edge pressing bump 423212 respectively. A spacing part 423213 is provided between the front-edge pressing bump 423211 and the rear-edge pressing bump 423212, and heights of the front-edge pressing bump 423211 and the rear-edge pressing bump 423212 are higher than that of the spacing part 423213. In this way, during the rotation of the front-rear edge pressure roller 4232, the front-edge pressing bump 423211 and the rear-edge pressing bump 423212 work cooperatively with the front-rear edge welding head 4231 to form the front edge 02 of one mask body and the rear edge 03 of another mask body by welding on the semi-finished products of the mask body respectively, and there is a discontinuity between the front edge 02 of one mask body and the rear edge 03 of another mask body, instead of continuity, thus facilitating the body cutting assembly 424 to cut a discontinuous position between two adjacent mask bodies subsequently, so as to divide a plurality of continuous mask bodies into a plurality of individual mask bodies.

Referring to FIG. 24, FIG. 24 is a schematic structural diagram of the body cutting assembly according to an embodiment of the disclosure. The body cutting assembly 424 includes a cutting roller 4241 and a cutter 4242. According to an embodiment of the disclosure, two cutting rollers 4241 are provided, and the two cutting rollers 4241 are rotatably arranged on the molding mounting plate 421. The two cutting rollers 4241 are both connected with the output end of the conveying driving member 4213 through a transmission member such as a gear or a chain, so as to share the conveying driving member 4213 with the conveying roller 4212 and ensure the consistency of conveying. The cutter 4242 is arranged on one of the two cutting rollers 4241. During the conveying process of the continuous mask bodies, the cutter 4242 cuts the continuous mask bodies once every time the cutting roller 4241 rotates by one circle. In this way, the continuous mask bodies formed after welding are cut into individual mask bodies to facilitate subsequent processing. Preferably, the molding conveying assembly 421, the side-edge welding assembly 422, the front-rear edge welding assembly 423 and the body cutting assembly 424 are all provided with a position adjuster 425. Specifically, the position adjuster 425 includes an adjusting screw 4251, an adjusting handwheel 4252 and an elastic member 4253. One end of the adjusting screw 4251 is connected with the adjusting handwheel 4252, and the other end of the adjusting screw 4251 is connected with the conveying roller 4212, the side-edge pressure roller 4222, the front-rear edge pressure roller 4232 and the cutting roller 4241. The elastic member 4253 is sleeved on the adjusting screw 4251, one end of the elastic member 4253 abuts against the molding mounting plate 4211, and the other end of the elastic member 4253 abuts against the conveying roller 4212, the side-edge pressure roller 4222, the front-rear edge pressure roller 4232 and the cutting roller 4241. The elastic member 4253 is a spring. In this way, a position of the conveying roller 4212, the side-edge pressure roller 4222, the front-rear edge pressure roller 4232 or the cutting roller 4241 can be adjusted by rotating the adjusting handwheel 4252 to adapt to the semi-finished products of the mask bodies with different thicknesses. The elastic member 4253 is always in a compressed state, and an elastic force of the elastic member 4253 always acts on the conveying roller 4212, the side-edge pressure roller 4222, the front-rear edge pressure roller 4232 or the cutting roller 4241, such that the conveying roller 4212, the side-edge pressure roller 4222, the front-rear edge pressure roller 4232 or the cutting roller 4241 is not easily deviated, thus ensuring the production quality of the product. Preferably, the forming mounting plate 4211 is provided with a cooling fan 42111. The cooling fan 42111 faces the side-edge welding assembly 422 and the front-rear edge welding assembly 423. After the welding is completed, the cooling fan 42111 quickly cools a welding position of the semi-finished product of the mask body, preventing a welding temperature from being too high to deform the semi-finished product of the mask body due to high temperature.

Preferably, the molding mechanism 42 is connected with the synchronous transmission mechanism 35. It is noted that, in order to make the nose wire material loading consistent with the mask body shaping, the driving assembly of the synchronous transmission mechanism 35 of the nose wire loading device and the conveying driving member 4213 of the molding mechanism 42 share the same driving source. In specific application, the two can be transmitted through the cooperation of a chain with a gear.

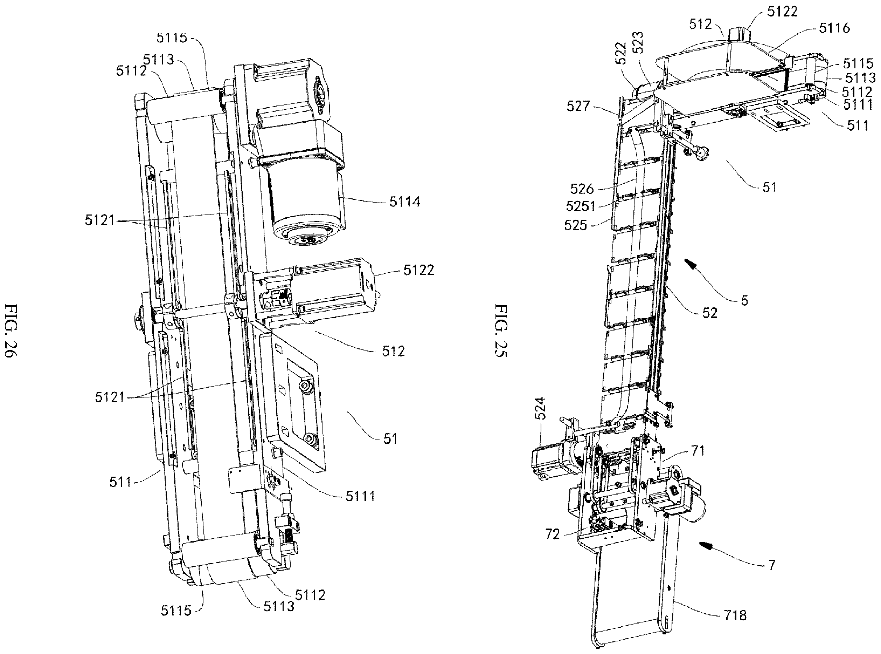

Continuously referring to FIG. 1 and FIG. 25, FIG. 25 is a schematic structural diagram of the mask overturning and conveying device and the collecting device according to an embodiment of the disclosure. Furthermore, the mask overturning and conveying device 5 includes an overturning and transmitting mechanism 51 and a conveying mechanism 52 which are arranged in sequence. The overturning and transmitting mechanism 51 is configured for receiving and turning over the mask body, and conveys the mask body to the conveying mechanism 52. The conveying mechanism 52 conveys the mask body through the ear loop welding device 6 for ear loop welding, and then conveys the mask body to the collecting device 7 for collecting the mask body. Preferably, the overturning and transmitting mechanism 51 and the conveying mechanism 52 are vertically arranged, so that the whole mask production line is arranged in an "L" shape, which is convenient for the arrangement of the production line.

Referring to FIG. 26, FIG. 26 is a schematic structural diagram of the overturning and transmitting mechanism according to an embodiment of the disclosure. Furthermore, the overturning and transmitting mechanism 51 includes a transmitting assembly 511 and an overturning assembly 512. The overturning assembly 512 is arranged on the transmitting assembly 511. Further, the transmitting assembly 511 includes a transmitting frame 5111, a transmitting roller 5112, a transmitting belt 5113 and a transmitting driving member 5114. The transmitting roller 5112 is rotatably arranged on the transmitting frame 5111. The transmitting belt 5113 is wound around the transmitting roller 5112. An output end of the transmitting driving member 5114 is connected with the transmitting roller 5112, and the transmitting driving member 5114 is a motor. Furthermore, the overturning assembly 512 includes an overturning plate 5121 and an overturning driving member 5122. The overturning plate 5121 is rotatably arranged on the transmitting frame 5111 through a rotating shaft, the overturning plate 5121 is parallel to the transmitting belt 5113, and the overturning plate 5121 is located on two sides of the transmitting belt 5113. The overturning driving member 5122 is arranged on the transmitting frame 5111, an output end of the overturning driving member 5122 is connected with a rotating shaft, and the overturning driving member 5122 is a motor. In specific application, a driving force generated by the transmitting driving member 5114 drives the transmitting roller 5112 to rotate, and the transmitting roller 5112 drives the transmitting belt 5113 to rotate, thus transmitting the mask body placed on a surface of the transmitting belt 5113 to a station of the overturning assembly 512, that is, the mask body corresponds to the overturning plate 5121, the overturning driving member 5122 generates the driving force to drive the rotating shaft to rotate, and the rotating shaft drives the overturning plate 5121 to rotate, thus driving the mask body to turn over by 180 degrees. It should be noted that the overturning driving member 5122 can drive the overturning plate 5121 to turn over by 360 degrees. According to an embodiment of the disclosure, four overturning plates 5121 are provided, and the four overturning plates 5121 are grouped in pairs. The two overturning plates 5121 in each group are located on two sides of the transmitting belt 5113, and the two groups of overturning plates 5121 are arranged at 180 degrees, so that the successive overturning of the mask body can be realized to save the waiting time and improve the overturning efficiency. Certainly, the number of the overturning plates 5121 may be adaptively increased or decreased according to the actual requirements, and the above is only one embodiment of the disclosure, and should not be limited to this. Preferably, the transmitting assembly 511 further includes a pressure roller 5115. The pressure roller 5115 is arranged on the transmitting frame 5111, the pressure roller 5115 is located above the transmitting roller 5112, and the pressure roller 5115 faces the transmitting belt 5113. A gap is provided between the pressure roller 5115 and the transmitting belt 5113. When the mask body passes through the gap, the pressure roller 5115 presses the mask body, so that the mask body is transported close to the transmitting belt 5113. Preferably, the transmitting assembly 511 further includes protective shields 5116, the protective shields 5116 are oppositely arranged on the transmitting frame 5111, and the protective shields 5116 are located on two sides of the overturning plate 5121. When the overturning plate 5121 turns over the mask body, the protective shields 5116 protect the mask body to prevent the mask body from flying out during the overturning process.

The conveying mechanism 52 includes a conveying frame 521, a conveying roller 522, a conveying belt 523, a conveying driving member 524 and a conveying fixture 525. The conveying roller 522 is rotatably arranged on the conveying frame 521. A driving belt is wound around the conveying roller 522. The conveying driving member 524 is arranged on the conveying frame 521, an output end of the conveying driving member 524 is connected with one end of the conveying roller 522, and the conveying driving member 524 is a motor. The conveying fixture 525 is arranged on the conveying belt 523. In specific application, the overturning and transmitting mechanism 1 conveys the overturned mask body to the conveying fixture 525, and a contour of the conveying fixture 525 is matched with a shape of the mask body. The conveying fixture 525 is provided with a baffle plate 5251 at both sides which is configured for limiting the mask body. The conveying driving member 524 generates a driving force to drive the conveying roller 522 to rotate, the conveying roller 522 drives the conveying belt 523 to rotate, and the conveying belt 523 drives the mask body carried by the conveying fixture 525 to move past the ear loop welding device 6 and reach a station of the collecting device 7. The collecting device 7 collects the mask body after being welded with the ear loops. Preferably, the conveying mechanism 52 further includes a pressing belt 526, two ends of the pressing belt 526 are arranged on the conveying frame 521, and the pressing belt 526 in an arc shape is arranged to press on the conveying fixture 525. When the conveying fixture 525 conveys the mask body to the station of the collecting device 7, the pressing belt 526 presses the mask body carried by the conveying fixture 525 to prevent the light mask body from falling off from the conveying fixture 525. Preferably, the conveying mechanism 52 further includes a baffle plate 527. The baffle plate 527 is arranged on the conveying frame 521, and the baffle plate 527 is located on one side of the conveying belt 523 far away from the overturning and transmitting mechanism 51. In the process of transmitting the overturned mask body to the conveying fixture 525 by the overturning and transmitting mechanism 51, the baffle plate 527 blocks the mask body to prevent the mask body from falling off from the conveying fixture 525.

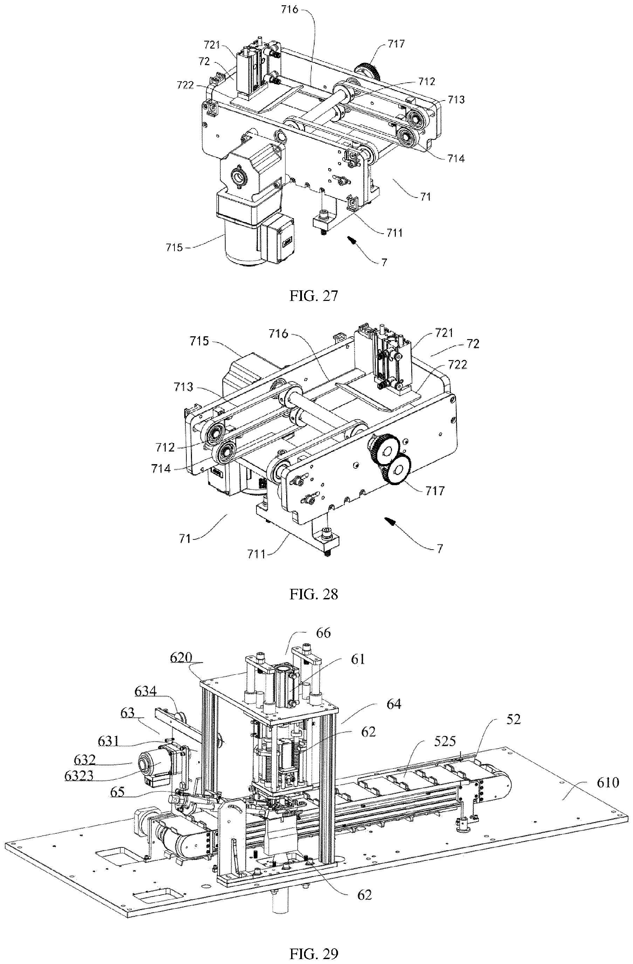

Continuously referring FIG. 27 and FIG. 28, FIG. 27 is a structural schematic diagram of the collecting device according to an embodiment of the disclosure, and FIG. 28 is another structural schematic diagram of the collecting device according to an embodiment of the disclosure. Furthermore, the collecting device 7 includes a collecting conveying assembly 71 and a collecting pressing assembly 72. A feeding end of the collecting conveying assembly 71 faces a discharge end of the conveying mechanism 52. The collecting pressing assembly 72 is located at a discharge end of the collecting conveying assembly 71. Further, the collecting conveying assembly 71 includes a collecting conveying frame 711, collecting conveying wheels 712, a first collecting conveying belt 713, a second collecting conveying belt 714, a collecting conveying driving member 715 and a filling block 716. The collecting conveying wheels 712 are rotatably arranged on the collecting conveying frame 711 through two rotating shafts respectively, one end of each rotating shaft is sleeved with a gear 717, and the two gears 717 mesh with each other. The first collecting conveying belt 713 and the second collecting conveying belt 714 are respectively wound around the collecting conveying wheels 712. The collecting conveying driving member 715 is arranged on the collecting conveying frame 711, an output end of the collecting conveying driving member 715 is connected with one of the two rotating shafts, and the collecting conveying driving member 715 is a motor. The filling block 716 716 is arranged on the collecting conveying frame 711, and the filling block 716 is located between the first collecting conveying belt 713 and the second collecting conveying belt 714. Furthermore, the collecting pressing assembly 72 includes a pressing driving member 721 and a pressing plate 722. The pressing driving member 721 is arranged on the collecting conveying frame 711, and the pressing driving member 721 is an air cylinder. The pressing plate 722 is connected with an output end of the pressing driving member 721. In specific application, the collecting conveying driving member 715 drives the rotating shaft to rotate, thus driving the first collecting conveying belt 713 and the second collecting conveying belt 714 to rotate relatively, and conveying the mask body conveyed by the conveying fixture 525 to the filling block 716. The pressing driving member 721 drives the pressing plate 722 to press down. After pressing down for a predetermined number of times, a predetermined number of mask bodies are stacked into a group, which is convenient for packing, collection and subsequent processing. It should be noted that the collecting conveying driving member 715 has a counting function, which may be set according to actual requirements. For example, if 10 masks are collected as one group and the collecting conveying driving member 715 turns for 10 cycles, it is judged that the pressing driving member drives the pressing plate 722 to press down for 10 times, and 10 masks are collected in total.

Preferably, the collecting conveying assembly 71 further includes a discharging member 718, and the discharging member 718 is located below the collecting pressing assembly 72. A structure of the discharging member 718 is the same as that of the transmitting assembly 511, which will not be described here. After the pressing assembly stacks the predetermined number of mask bodies on a transmitting belt 5113 of the discharging member 718, the transmitting belt 5113 moves forwards by one unit, and the pressing assembly continues to stack a predetermined number of mask bodies in an area vacated by the transmitting belt 5113, and repeats the process continuously, thus realizing the grouping collection of the predetermined number of mask bodies.

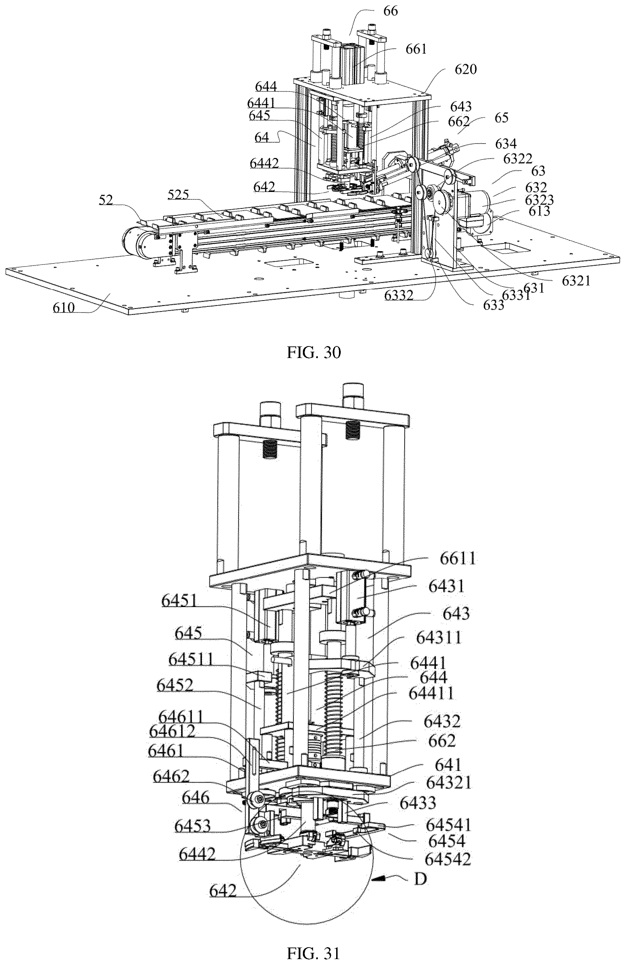

Referring to FIG. 29 and FIG. 30, FIG. 29 is a schematic structural diagram of the mask ear loop welding device and the overturning and transmitting mechanism according to an embodiment of the disclosure; and FIG. 30 is a schematic structural diagram of the mask ear loop welding device and the overturning and transmitting mechanism according to an embodiment of the disclosure from another perspective. According to an embodiment of the disclosure, the mask ear loop welding device includes a welding mechanism 62, a wire material loading mechanism 63, an ear loop transmission mechanism 64, a cutting mechanism 65 and a welding driving mechanism 66. The welding mechanism 62 is arranged on a conveying path of the conveying mechanism 52, and a welding end of the welding mechanism 62 faces the fixture 525 of the mask conveying mechanism 52. The wire material loading mechanism 63 is arranged on the conveying path of the conveying mechanism 52 of the mask overturning and conveying device 5, and the wire material loading mechanism 63 is configured for loading the ear loop wire material. The wire material loading mechanism 63 and the welding mechanism 62 are respectively located at two opposite sides of the conveying mechanism 52. The ear loop transmission mechanism 64 is arranged above the conveying mechanism 52, and the ear loop transmission mechanism 64 is located between the welding mechanism 62 and the wire material loading mechanism 63. The ear loop transmission mechanism 64 receives the ear loop wire material loaded by the wire material loading mechanism 63, transmits and shapes the ear loop wire material. The cutting mechanism 65 is arranged at one side of the ear loop transmission mechanism 64, and the cutting mechanism 65 cuts the transmitted and shaped ear loop wire material to form the ear loop. The welding driving mechanism 66 is arranged above the ear loop transmission mechanism 64, the welding driving mechanism 66 drives the ear loop to the welding mechanism 62, and the welding mechanism welds the ear loop onto the mask body. Through the cooperative arrangement of the welding mechanism 62, the wire material loading mechanism 63, the ear loop transmission mechanism 64, the cutting mechanism 65 and the welding driving mechanism 66, the automatic loading, shaping, cutting and welding of the ear loop to the mask body are smoothly realized, thus improving the production efficiency of the ear loop and ensuring the production efficiency of masks.

Specifically, the mask ear loop welding device according to an embodiment of the disclosure further includes a welding mounting plate 610. The conveying mechanism 52 is arranged on a surface of the welding mounting plate 610. The welding mechanism 62 is an existing ultrasonic welding mechanism, and will not be elaborated herein. In specific setting, the welding mechanism 62 is mounted on the welding mounting plate 610 and adjacent to the conveying mechanism 52. A welding head of the welding mechanism 62 faces the fixture 525, and performs ultrasonic welding on the mask body in the fixture 525.

The wire material loading mechanism 63 includes a wire material loading rack 631, and an ear loop loading assembly 632, a tensioning assembly 633 and a material changing assembly 634 which are arranged on the wire material loading rack 631. The wire material loading rack 631 is arranged at one side of the ear loop transmission mechanism 64. The ear loop loading assembly 632, the tensioning assembly 633 and the material changing assembly 634 are arranged in sequence in a direction towards the ear loop transmission mechanism 64. The ear loop loading assembly 632 is configured for loading the ear loop wire material, the tensioning assembly 633 receives and tensions the loaded ear loop wire material, and the material changing assembly 634 receives and deflects the tensioned ear loop wire material. The deflected ear loop wire material extends to a feeding end of the ear loop transmission mechanism 64. Specifically, the wire material loading rack 631 is plate-shaped, which is vertically arranged on the welding mounting plate 610 and located on one side of the conveying mechanism 52 far away from the welding mechanism 62. Preferably, the wire material loading rack 631 is arranged opposite to the welding mechanism 62. The ear loop loading assembly 632 includes a roll member (not shown in the drawing), a driving wheel 6321, a wire-pressing driven wheel 6322, and a loading driving member 6323. The roll member may be a scroll, and the roll member is sleeved with a rolled ear loop wire material. The driving wheel 6321 and the wire-pressing driven wheel 6322 are rotatably connected at one side of the wire material loading rack 631 respectively, and a gap is provided between the driving wheel 6321 and the wire-pressing driven wheel 6322. After passing through a transition gear, the ear loop wire material released by the roll member passes through the gap between the driving wheel 6321 and the wire-pressing driven wheel 6322, and the wire-pressing driven wheel 6322 is matched with the driving wheel 6321 to press the ear loop wire material. The loading driving member 6323 is arranged on one side of wire material loading rack 631 facing away from the driving wheel 6321. An output end of the loading driving member 6323 passes through the wire material loading rack 631 and is connected with the driving wheel 6321, which drives the driving wheel 6321 to rotate, thus driving the wire-pressing driven wheel 6322 to rotate, and then pulling the roll member to discharge. The tensioning assembly 633 is located below the wire-pressing driven wheel 6322. The tensioning assembly 633 includes a tensioning guide post 6331 and a tensioning wheel 6332. The tensioning guide post 6331 is arranged along a height direction of the wire material loading rack 631, and the tensioning wheel 6332 is slidably connected onto the tensioning guide post 6331. The tensioned ear loop wire material extends downward and is wound around the tensioning wheel 6332. The ear loop wire material can be tensioned by moving a position of the tensioning wheel 6332 down. The tensioned ear loop wire extends obliquely upward towards the material changing assembly 634, forms a "V"-shaped structure after passing through the transition wheel, and then is deflected after extending to the material changing assembly 634. According to an embodiment of the disclosure, the material changing assembly 634 is a roller wheel rotatably connected to the wire material loading rack 631. The ear loop wire material is tensioned and loaded to ensure the smoothness of subsequent transmitting and shaping.

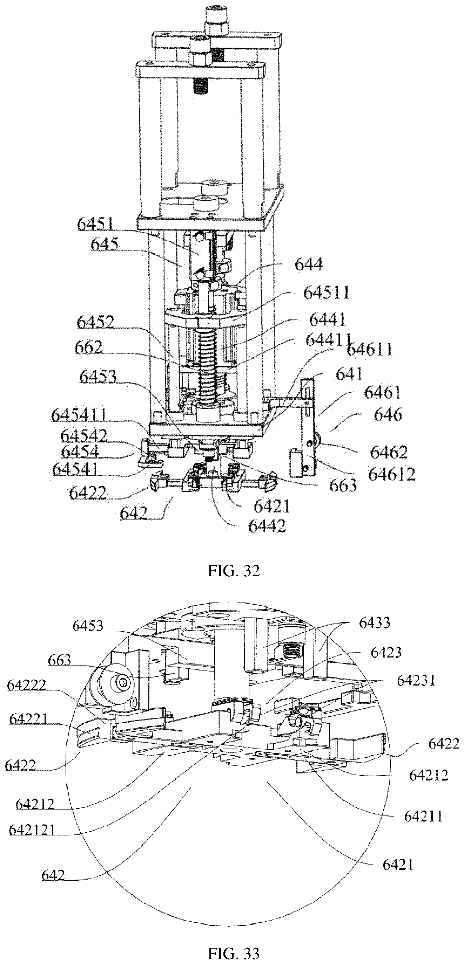

Continuously referring to FIG. 29 to FIG. 33, FIG. 31 is a schematic structural diagram of the ear loop transmission mechanism and the welding driving mechanism according to an embodiment of the disclosure, FIG. 32 is another schematic structural diagram of the ear loop transmission mechanism and the welding driving mechanism according to an embodiment of the disclosure, and FIG. 33 is an enlarged view of a part D of FIG. 31 according to an embodiment of the disclosure. Furthermore, the ear loop transmission mechanism 64 includes a transmission bearing frame 641, a transmitting shaping assembly 642, a material clamping driving assembly 643, a material rotating driving assembly 644 and an unloading driving assembly 645. The transmitting shaping assembly 642 is located above the conveying mechanism 52. The material rotating driving assembly 644 is arranged on the transmission bearing frame 41, an output end of the material rotating driving assembly is connected with the transmitting shaping assembly 642, and the material rotating driving assembly drives the transmitting shaping assembly 642 to rotate. The material clamping driving assembly 643 and the unloading driving assembly 645 are respectively arranged on the transmission bearing frame 641, drive ends of the material clamping driving assembly 643 and the unloading driving assembly 645 directly face a material clamping end and an unloading end of the transmitting shaping assembly 642 respectively. The transmitting shaping assembly 642 receives the loaded ear loop wire material, the material clamping driving assembly 643 drives the material clamping end of the transmitting shaping assembly 642 to clamp the ear loop wire material, the material rotating driving assembly 644 drives the transmitting shaping assembly 642 to rotate so as to transmit and shape the ear loop wire material, and the unloading driving assembly 645 drives the unloading end of the transmitting shaping assembly to unload the shaped and cut ear loop.

Specifically, according to an embodiment of the disclosure, the mask ear loop welding device further includes a welding mounting frame 620. The welding mounting frame 620 is a gantry frame, which is arranged on the welding mounting plate 610 across the conveying mechanism 52. The transmission bearing frame 641 is fixedly mounted on the welding mounting frame 620 through a connecting rod, so that the transmission bearing frame 641 is suspended above the transmission mechanism 52. According to an embodiment of the disclosure, the transmission bearing frame 641 is a rectangular plate, which is parallel to the conveying mechanism 52, and four corners of the transmission bearing frame are fixedly connected to the welding mounting frame 620 through four connecting rods respectively. The transmitting shaping assembly 642 is located between the transmission bearing frame 641 and the conveying mechanism 52. The transmitting shaping assembly 642 includes a rotating bearing frame 6421, two shaping limiters 6422 and two clamping members 6423. The two shaping limiters 6422 are respectively arranged at two opposite ends of the rotating bearing frame 6421, the two clamping members 6423 are respectively arranged at two opposite sides of the rotating bearing frame 6421, and each clamping member 6423 includes two clamping parts 64231 arranged side by side. Each clamping part 64321 is rotatably connected to the rotating bearing frame 6421, and is provided with a material clamping end and an unloading end. A head of the ear loop wire material is clamped by the clamping parts 64321, and the ear loops are shaped in the shaping limiters 6422 by the rotating bearing frame 6321. According to an embodiment of the disclosure, the rotating bearing frame 6421 includes a main frame 64211 and two auxiliary frames 64212. The two auxiliary frames 64212 are vertically connected to a middle position of the main frame 64211, the two auxiliary frames 64212 are parallel to each other with a gap therebetween, and two ends of each auxiliary frame 64212 extend to two opposite sides of the main frame 64211. The two shaping limiters 6422 are respectively arranged at the two opposite ends of the main frame 64211. According to an embodiment of the disclosure, the shaping limiter 6422 is an arc-shaped block. Preferably, an outer wall of the shaping limiter 6422 is provided with a limiting groove 64221, the limiting groove 64221 is specifically an arc-shaped groove opened along an arc-shaped bending direction of the shaping limiter 6422, and is configured for limiting a position of the ear loop wire material. Preferably, a wall of the limiting groove 64221 close to the conveying mechanism 52 is an inclined plane, and a wall of the limiting groove 64221 far from the conveying mechanism 52 is a vertical plane perpendicular to the shaping limiter 6422. The wall of the inclined plane can facilitate the sliding-in and sliding-out of the ear loop wire material, and the wall of the vertical plane limits the ear loop wire material. Preferably, a middle position of the shaping limiter 6422 is provided with a notch 64222. The two clamping members 6423 are provided with four clamping parts 64321, and the four clamping parts 64321 are rotatably connected to the two opposite ends of the two auxiliary frames 64212, and the two clamping parts 64321 on the same side between the two shaping limiters 6422 are arranged side by side. The sequential connecting lines of the four clamping parts 64321 defines a rectangular structure, and a length of the auxiliary frame 64212 is larger than that of the shaping limiter 6422, so that the four clamping parts 64321 are respectively located outside the shaping limiter 6422. A middle position of the clamping part 64231 is rotatably connected with opposite inner walls of the auxiliary frames 64212. One end of the clamping part 64231 facing away from the main frame 64211 has a hook structure. The end of the clamping part 64231 with the hook structure is a material clamping end of the clamping part 64231, and the other end is an unloading end of the clamping part 64231. An end of the auxiliary frame 64212 is provided with a matched clamping pressing block 642121 corresponding to the hook structure of the clamping part 64231. When the clamping part 64231 is rotated downwards, the hook structure of the clamping part 64231 can be buckled with the clamping pressing block 642121 to complete a clamping action. The material clamping driving assembly 643 includes a clamping driving member 6431, a clamping pressing rod 6432 and a clamping pressing head 6433. The clamping pressing rod 6432 is slidably connected with the transmission bearing frame 641, an output end of the clamping driving member 6431 is connected with one end of the clamping pressing rod 6432, and the other end of the clamping pressing rod 6432 is connected with the clamping pressing head 6433. The clamping driving member 6431 drives the clamping pressing rod 6432, and the clamping pressing rod 6432 drives the clamping pressing head 6433 to be close to or far away from the material clamping end of the clamping part 64321. According to an embodiment of the disclosure, numbers of the clamping pressing rod 6432 and the clamping pressing head 6433 are both two, the clamping driving member 6431 is mounted on the welding mounting frame 620, the output end of the clamping driving member 6431 is connected with one ends of the two clamping pressing rods 6432 through a first driving connecting block 64311, and the other ends of the two clamping pressing rods 6432, after passing through the transmission bearing frame 641, are connected with one ends of the two clamping pressing heads 6433 through a second driving connecting block 64321. The other ends of the two clamping pressing heads 6433 are respectively aligned with the material clamping ends of the two clamping parts 64231 arranged side by side. The clamping pressing rod 6432 is slidably connected with the transmission bearing frame 641, the clamping pressing rod 6432 is perpendicular to the transmission bearing frame 641, and the first driving connecting block 64311 and the second driving connecting block 64321 are both parallel to the bearing frame 641. The clamping driving member 6431 drives the two clamping pressing rods 6432 to move down, and the two clamping pressing rods 6432 drive the two clamping pressing heads 6433 to press against the material clamping ends of the two clamping parts 64231 arranged side by side, thus completing a clamping action. According to an embodiment of the disclosure, the clamping driving member 6431 is an air cylinder. The unloading driving assembly 645 includes an unloading driving member 6451, an unloading pressing rod 6452 and an unloading pressing head 6453. The unloading pressing rod 6452 is slidably connected with the transmission bearing frame 641, an output end of the unloading driving member 6451 is connected with one end of the unloading pressing rod 6452, and the other end of the unloading pressing rod 6452 is connected with the unloading pressing head 6453. The unloading driving member 6451 drives the unloading pressing rod 6452, and the unloading pressing rod 6452 drives the unloading pressing head 6453 to be close to or far away from the unloading end of the clamping part 64321. According to an embodiment of the disclosure, two unloading pressing rods 6452 are provided, and the unloading driving member 6451 is mounted on the welding mounting frame 620. The output end of the unloading driving member 6451 is connected with one ends of the two unloading pressing rods 6452 through a third driving connecting block 64511, the other ends of the two unloading pressing rods 6452, after passing through the transmission bearing frame 641, are connected with one ends of the unloading pressing heads 6453, and the other ends of the unloading pressing heads 6453 are opposite to the unloading ends of the two clamping parts 64231 arranged side by side. The unloading pressing rod 6432 is slidably connected with the transmission bearing frame 641, the unloading pressing rod 6452 is perpendicular to the transmission bearing frame 641, and the third driving connecting block 64511 is parallel to the transmission bearing frame 641. The unloading driving member 6451 drives the two unloading pressing rods 6452 to move down, and the two unloading pressing rods 6452 drive the unloading pressing head 6453 to press against the unloading ends of the two clamping parts 64231 arranged side by side, so that the rotating clamping parts 64231 are reset to complete an unloading action. According to an embodiment of the disclosure, the unloading driving member 6451 is an air cylinder. Preferably, the unloading driving assembly 645 further includes a loop pushing member 6454. The loop pushing member 6454 is connected with the unloading pressing head 6453 and is matched with the shaping limiter 6422.The loop pushing member 6454 moves with the unloading pressing head 6453, and assists in pushing off the ear loop on the shaping limiter 6422. Specifically, the loop pushing member 6454 includes a loop pushing body 64541 and a pushing block 64542, the loop pushing body 64541 is matched with the shaping limiter 6422, and the pushing block 64542 is matched with the notch 64222. The loop pushing body 64541 is connected to an outer wall of the unloading pressing head 6453 through an L-shaped mounting rod 645411, so that the loop pushing body 64541 extends to the outside of the shaping limiter 6422. The loop pushing body 64541 has a U-shaped structure, which can cover the shaping limiter 6422. A tail end of an opening part of the loop pushing body 64541 extends inward to form an L-shaped structure, and the pushing block 64542 is located in a middle position of the loop pushing body 64541 and opposite to the notch 64222. The loop pushing member 6454 moves down synchronously with the unloading action of the unloading pressing head 6453, so that the pushing block 64542 pushes down the middle position of the cut ear loop, and the tail end of the opening part of the loop pushing body 64541 pushes down the ear loop outside the shaping limiter 6422, so that the ear loop is separated from the shaping limiter 6422. Preferably, the ear loop transmission mechanism 64 further includes a feeding assembly 646. The feeding assembly 646 is arranged on the transmission bearing frame 641 and adjacent to the transmitting shaping assembly 642. The feeding assembly 646 is configured for receiving the ear loop wire material loaded by the wire material loading mechanism 63 and guiding the ear loop wire material to the material clamping end of the transmitting shaping assembly 642. Specifically, the feeding assembly 646 includes a feeding frame 6461 and a feeding member 6462. One end of the feeding frame 6461 is connected to the transmission bearing frame 641, and the other end extends toward the outside of the transmitting shaping assembly 642. The feeding member 6462 is rotatably connected to the feeding frame 6461 and is close to the transmitting shaping assembly 642. The ear loop wire material which is deflectively extended by the material changing assembly 634 is wound around the feeding member 6462, and then continues to extend towards the material clamping end of the clamping part 64231 of the transmitting shaping assembly 642. Through the feeding transition of the feeding member 6462, the ear loop wire material can be fed more smoothly before being transmitted and shaped, thus ensuring the stable subsequent transmitting and shaping. According to an embodiment of the disclosure, the feeding member 6462 is a roller wheel. Preferably, the feeding frame 6461 includes a feeding horizontal frame 64611 and a feeding vertical frame 64612. One end of the feeding horizontal frame 64611 is connected with the transmission bearing frame 641, and the other end extends away from the transmission bearing frame 641. One end of the feeding vertical frame 64612 is detachably connected with the other end of the feeding horizontal frame 64611, and the other end of the feeding vertical frame 64612 extends toward the outside of the transmitting shaping assembly 642. The feeding member 6462 is rotatably connected to the other end of the feeding vertical frame 64612. In this way, by detachably connecting the feeding horizontal frame 64611 and the feeding vertical frame 64612, a relative connecting position of the feeding horizontal frame 64611 and the feeding vertical frame 64612 can be flexibly adjusted, and then a position of the feeding member 6462 can be flexibly adjusted, so as to better provide feeding guiding. Preferably, two feeding members 6462 are provided, and the two feeding members 6462 are rotatably connected to the other end of the feeding vertical frame 64612 in an up-and-down staggered manner, so as to further improve a feeding guiding effect. The material rotating driving assembly 644 includes a material rotating driving member 6441 and a material rotating driving column 6442. The material rotating driving member 6441 is mounted on the transmission bearing frame 641 through a material rotating bearing frame 64411, an output end of the material rotating driving member 6441 is connected with one end of the material rotating driving column 6442 through a coupler, and the other end of the material rotating driving column 6442, after passing through the transmission bearing frame 641, is connected with the transmitting shaping assembly 642, and specifically connected with the middle position of the main frame 64211. The material rotating driving column 6442 is rotationally connected with the transmission bearing frame 641 and is perpendicular to the transmission bearing frame 641. The material rotating driving member 6441 drives the material rotating driving column 6442 to rotate, and drives the transmitting shaping assembly 642 to rotate. According to an embodiment of the disclosure, the material rotating driving member 6441 is a motor.

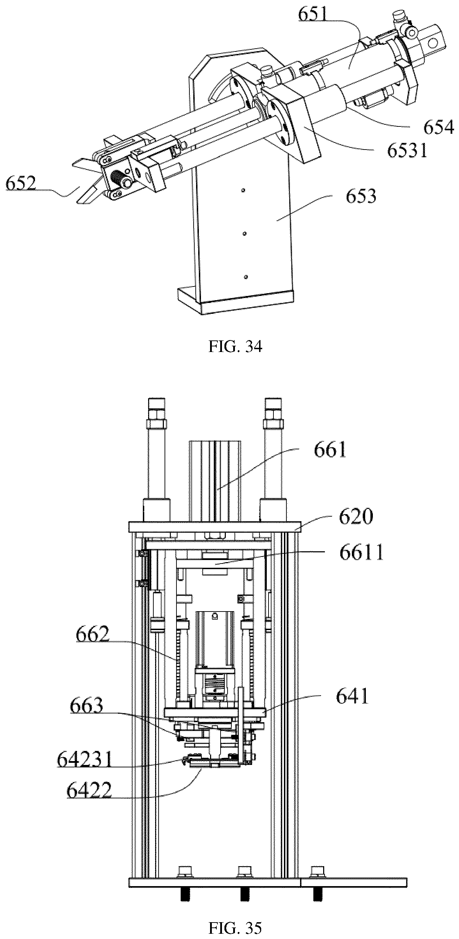

Continuously referring to FIG. 34, FIG. 34 is a schematic structure diagram of the cutting mechanism according to an embodiment of the disclosure. Furthermore, the cutting mechanism 65 includes a cutting driving assembly 651 and a cutting head assembly 652. An output end of the cutting driving assembly 651 is connected with the cutting head assembly 652, which drives the cutting head assembly 652 to be close to the transmitted and shaped ear loop wire material, and the cutting head assembly 652 cuts the ear loop wire material to form the ear loop. Specifically, the cutting mechanism 65 further includes a cutting supporting rack 653. The cutting supporting rack 653 is arranged on the welding mounting plate 610 and located at one side of the conveying mechanism 52. Preferably, the cutting supporting rack 653 is adjacent to the welding mechanism 62. An upper end of the welding mounting plate 610 is provided with a cutting bearing block 6531. One end of the cutting bearing block 6531 is connected with an upper end of the cutting supporting rack 653, and the other end extends above the conveying mechanism 52. The cutting driving assembly 651 is arranged on the cutting bearing block 6531, and an output end of the cutting driving assembly is connected with the cutting head assembly 652. A cutting end of the cutting head assembly 652 faces the transmitting shaping assembly 642. Specifically, the cutting end faces a position between the two clamping parts 64231 arranged side by side, and is configured for cutting the transmitted and shaped ear loop wire material, cutting out the loop head and forming the ear loop. According to an embodiment of the disclosure, the cutting driving assembly 651 may be an air cylinder, and the cutting head assembly 652 may be a pneumatic finger matched with a cutter, which is not limited here. Preferably, the cutting bearing block 6531 is rotatably connected with the cutting supporting rack 653, and an angle of the cutting head assembly 652 facing the transmitting shaping assembly 642 can be adjusted by rotating the cutting bearing block 6531, so as to be more suitable for cutting. Preferably, the cutting mechanism 665 further includes a cutting guiding member 654. Two cutting guiding members 654 are provided, and the two cutting guiding members 654 are respectively arranged on the cutting bearing block 6531 and located on two opposite sides of the cutting driving assembly 651. The cutting guiding member 654 is parallel to the cutting driving assembly 651. Two ends of the cutting guiding member 654 are connected to the cutting driving assembly 651 and the cutting head assembly 652 respectively, so as to guide the driving of the cutting driving assembly 651. According to an embodiment of the disclosure, the cutting guiding member 654 is a combination of a guide post and a guide bush.

Continuously referring to FIG. 35, FIG. 35 is a schematic structural diagram of the ear loop transmission mechanism and the welding driving mechanism according to an embodiment of the disclosure. Furthermore, the welding driving mechanism 66 includes a welding driving assembly 661, a reset guiding assembly 662 and a welding pressure block assembly 663. The welding driving assembly 661 is connected with the welding pressure block assembly 663 through the reset guiding assembly 662. The welding driving assembly 661 drives the welding pressure block assembly 663, the welding pressure block assembly 663 presses on the head of the ear loop, the welding mechanism 662 welds the head of the ear loop to the mask body, and the reset guiding assembly 662 resets the welding pressure block assembly 663 after the welding is completed. The welding driving mechanism 66 is arranged on the welding mounting frame 620, and is located between the material clamping driving assembly 643 and the unloading driving assembly 645. Specifically, two reset guiding assemblies 662 are provided, and the welding pressure block assembly 663 has two welding pressure blocks. According to an embodiment of the disclosure, the welding driving assembly 661 is arranged on the welding mounting frame 620, and an output end of the welding driving assembly is respectively connected with one ends of two reset guiding assemblies 662 through a driving connecting plate 6611. The other ends of the two reset guiding assemblies 662, after passing through the transmission bearing frame 641, are respectively connected with the two welding pressure blocks of the welding pressure block assembly 663, and the welding pressure blocks of the welding pressure block assembly 663 are opposite to the middle position of the two clamping parts 64231 arranged side by side. The reset guiding assembly 662 is perpendicular to the transmission bearing frame 641. According to an embodiment of the disclosure, the reset guiding assembly 662 includes a reset guide post and a reset spring sleeved around the reset guide post, wherein the reset guide post is slidably connected with the transmission bearing frame 641, the reset spring abuts against the transmission bearing frame 641, and the welding pressure blocks of the welding pressure block assembly 663 are connected with the reset guide post. After the cutting mechanism 665 finishes cutting, the welding driving assembly 661 according to an embodiment of the disclosure drives the reset guide post of the reset guiding assembly 662 to descend, and then drives the welding pressure blocks of the welding pressure block assembly 663 to press the cut loop head on the mask body in the fixture 525. In this case, the reset spring is compressed, and the welding mechanism 662 completes the ultrasonic welding to realize the ear loop welding, and then the welding pressure block assembly 663 is reset under a reverse force of the reset spring.

According to an embodiment of the disclosure, the processes of transmitting, shaping and welding are as follows. For the convenience of understanding, four clamping parts 64231 are defined as a clamping part a, a clamping part b, a clamping part c and a clamping part d, wherein the clamping part a and the clamping part b are two clamping parts arranged side by side between the two shaping limiters 6222, while the clamping part c and the clamping part d are the other two clamping parts arranged side by side between the two shaping limiters 6222, and the clamping part a and the clamping part d are diagonally arranged. At the beginning, the clamping part a and the clamping part b are below the two clamping pressing heads 6433. The ear loop wire material loaded by the wire material loading mechanism 63 is connected to the material clamping end of the clamping part a through the feeding assembly 646. Then, the clamping driving member 6431 drives the clamping pressing head 6433 to press down on the material clamping ends of the clamping part a and the clamping part b, so that the clamping part a and the clamping part b rotate, and the material clamping ends press the loop head of the ear loop wire material against the clamping pressing block 642121. The clamping pressing head 6433 retracts after clamping, and the loop head is fixed at the clamping part a in this case. Then, the material rotating driving member 6441 drives the material rotating driving column 6442 to rotate by 180 degrees, and drives the transmitting shaping assembly 642 to rotate by 180 degrees, so that the ear loop wire material is wound in the limiting groove 64221 of the shaping limiter 6422 between the clamping part a and the clamping part c, and continues to pass through the clamping part c and extend to the clamping part d at the opposite corner. In this case, the clamping part c and the clamping part d are below the two clamping pressing heads 6433, and then, the clamping pressing heads 6433 press down to make the clamping part c and the clamping part d in a clamped state. In this way, the shaping limiter 6422 completes the transmitting and shaping of the ear loop wire material. Then, the cutting driving assembly 651 drives the cutting head assembly 652 to be close to the ear loop wire material between the clamping part c and the clamping part d. The cutting head assembly 652 cuts off the ear loop wire material between the clamping part c and the clamping part d, and cuts out another loop head to form an ear loop. Then, the welding driving assembly 661 drives the welding pressure block assembly 663 to press the two loop heads of the cut ear loops onto the mask body, and the welding mechanism 662 performs ultrasonic welding to complete mask welding. After that, the unloading driving member 6451 drives the unloading pressing head 6453 to press down on the unloading ends of the clamping part a and the clamping part b, so that the clamping part a and the clamping part b are reset, and meanwhile, the ear loop is withdrawn from the shaping limiter 6422 by the loop pushing member 6454. The rotating is continued, so that the subsequent ear loop wire material is wound around the shaping limiter 6422 between the clamping part d and the clamping part b, and passes through the clamping part b and extends to the clamping part a. The above process is repeated to cut and weld the ear loop of next mask body. Thus, the welding of the two ear loops of the mask body can be completed by oppositely arranging two mask ear loop welding devices 6 according to an embodiment of the disclosure, which is efficient and quick. The mask body with the welded ear loops is the finished mask product, which is conveyed to the collecting device 7 by the conveying mechanism 52 for collection.

The mask production process according to an embodiment of the disclosure is as follows. Three layers of filter mask materials are loaded by the mask material loading device, integrated into one piece, and then conveyed to the folding device 2 for folding, forming the semi-finished product of the mask body, which is then combined with the nose wire loaded by the nose loading device 3 and enters the mask body forming device 4 for edge sealing and forming into the mask body, and then cut into individual mask bodies, which are turned over and conveyed by the mask overturning and conveying device 5. The left and right ear loops are welded by the two ear loop welding devices 6 in turn to form the finished mask product, which is then conveyed to the collecting device 7 by the mask overturning and conveying device 5 to collect the finished product, thus completing the whole process of mask production.

Those described above are merely preferred embodiments of the disclosure, but are not intended to limit the disclosure. To those skilled in the art, the disclosure may have various changes and modifications. Any modifications, equivalent substitutions, and improvements made within the gist and principle of the disclosure shall all fall within the scope of protection claimed by the disclosure.

## Claims

1. A fully automatic mask production line, comprising:
a mask material loading device (1) configured for integrating and loading a mask material;
a folding device (2) adjacent to the mask material loading device (1), wherein the folding device (2) is configured to receive the integrated and loaded mask material, and fold the mask material into a semi-finished product of a mask body;
a nose wire loading device (3) adjacent to the folding device (2), wherein the nose wire folding device (3) is configured for loading a nose wire;
a mask body forming device (4) with a feeding end respectively opposite to the folding device (2) and the nose wire loading device (3), wherein the mask body forming device (4) is configured to receive and form the nose wire and the semi-finished product of the mask body that are loaded into the mask body;
a mask overturning and conveying device (5) adjacent to the mask body forming device (4), wherein the mask overturning and conveying device (5) is configured to receive and turn over the mask body, and then convey the mask body;
two ear loop welding devices (6) arranged on a conveying path of the mask overturning and conveying device (5), wherein the two ear loop welding devices (6) respectively weld a right ear loop and a left ear loop onto the mask body to form a finished mask product; and
a collecting device (7) arranged at a tail end of the conveying path of the mask overturning and conveying device (5), which is configured for collecting the finished mask product.

2. The fully automatic mask production line according to claim 1, wherein the mask material loading device (1) comprises a mask material loading frame (11), at least two mask material loading mechanisms (12) and an integrating mechanism; the at least two mask material loading mechanisms (12) and the integrating mechanism (13) are respectively arranged on the mask material loading frame (11), and each of the mask material loading mechanisms (12) comprises a mask material loading assembly (121), a mask material tensioning assembly (122) and a mask material guiding assembly (123) which are arranged in sequence; the integrating mechanism (13) is adjacent to the mask material guiding assembly (123); and the mask material loading assembly (121) is configured for loading the mask material, the mask material tensioning assembly (122) is configured to receive and tension the loaded mask material, and the mask material guiding assembly (123) is configured to receive and guide the tensioned mask material to the integrating mechanism for loading and integrating.

3. The fully automatic mask production line according to claim 1, wherein the folding device (2) comprises a creasing assembly (21) and a folding assembly (22); a feeding end of the creasing assembly (21) is adjacent to an integrating and loading end of the mask material loading device (1), and the folding assembly (22) is arranged on a discharge end of the creasing assembly (21); the creasing assembly (21) comprises a first creasing roller (211) and a second creasing roller (212), the first creasing roller (211) is arranged opposite to the second creasing roller (212), the first creasing roller (211) and the second creasing roller (212) are configured to perform creasing on the integrated and loaded mask material when the mask material passes between the first creasing roller (211) and the second creasing roller (212); the folding assembly (22) comprises a first folding member (221) and a second folding member (222); and the first folding member (221) and the second folding member (222) are configured to fold the mask material subjected to the creasing.

4. The fully automatic mask production line according to claim 1, wherein the nose wire loading device comprises a nose wire loading mechanism (31), a nose wire straightening mechanism (32), a nose wire fixed-length conveying mechanism (33), a nose wire fixed-length cutting mechanism (34) and a synchronous transmission mechanism (35); the nose wire loading mechanism (31), the nose wire straightening mechanism (32), the nose wire fixed-length conveying mechanism (33) and the nose wire fixed-length cutting mechanism (34) are arranged in sequence; the synchronous transmission mechanism (35) is respectively connected with the nose wire fixed-length conveying mechanism (33) and the nose wire fixed-length cutting mechanism (34); and the nose wire loading mechanism (31) is configured for loading the nose wire, the nose wire straightening mechanism (32) is configured to receive and straighten the loaded nose wire, the nose wire fixed-length conveying mechanism (33) is configured to receive the straightened nose wire and convey the nose wire with fixed-length to the nose wire fixed-length cutting mechanism (34), the nose wire fixed-length cutting mechanism (34) is configured to perform fixed-length cutting on the fixed-length conveyed nose wire, and the synchronous transmission mechanism (35) is configured to synchronize the conveying of the nose wire fixed-length conveying mechanism (33) with the cutting of the nose wire fixed-length cutting mechanism (34).

5. The fully automatic mask production line according to claim 4, wherein the mask body forming device (4) comprises a shaping mechanism (41) and a molding mechanism (42); the shaping mechanism (41) is arranged opposite to the folding device (2) and the nose wire loading device (3) respectively, and is configured to receive, shape and feed the semi-finished product of the mask body and the nose wire into the molding mechanism (42); and the molding mechanism (42) is connected with the synchronous transmission mechanism (35).

6. The fully automatic mask production line according to claim 5, wherein the molding mechanism (42) further comprises a body cutting assembly (424); and the body cutting assembly (424) is located on a conveying path of a conveying assembly (421), and the body cutting assembly (424) is configured for cutting the continuous mask body.

7. The fully automatic mask production line according to claim 1, wherein the mask overturning and conveying device (5) comprises an overturning and transmitting mechanism (51) and a conveying mechanism (52) which are arranged in sequence; the overturning and transmitting mechanism (51) is configured for receiving and turning over the mask body, and conveying the mask body to the conveying mechanism (52); the conveying mechanism (52) is configured to convey the mask body through the ear loop welding device (6) for ear loop welding, and then convey the mask body to the collecting device (7) for collecting the mask body; wherein, the overturning and transmitting mechanism (51) comprises a transmitting assembly and an overturning assembly (512); and a transmitting belt (5113) of the transmitting assembly (511) is arranged in parallel with an overturning plate (5121) of the overturning assembly (512), and the overturning plate (5121) is capable of turning over by 360 degrees.

8. The fully automatic mask production line according to claim 1, wherein the collecting device (7) comprises a collecting conveying assembly (71) and a collecting pressing assembly (72); a feeding end of the collecting conveying assembly (71) faces a discharge end of the mask overturning and conveying device (5); and the collecting pressing assembly (72) is located at a discharge end of the collecting conveying assembly (71).

9. The fully automatic mask production line according to claim 1, wherein the ear loop welding device (6) comprises a welding mechanism (62), a wire material loading mechanism (63), an ear loop transmission mechanism (64), a cutting mechanism (65) and a welding driving mechanism (66); the welding mechanism (62) is arranged on the conveying path of the mask overturning and conveying device (5), and a welding end of the welding mechanism (62) faces the mask overturning and conveying device (5); the wire material loading mechanism (63) is arranged on the conveying path of the mask overturning and conveying device (5), and the wire material loading mechanism (6) is configured for loading ear loop wire material; the wire material loading mechanism (63) and the welding mechanism (62) are respectively arranged at two opposite sides of the mask overturning and conveying device (5), the ear loop transmission mechanism (64) is arranged above the mask overturning and conveying device (5), and the ear loop transmission mechanism (64) is located between the welding mechanism (62) and the wire material loading mechanism (63); the ear loop transmission mechanism (64) is configured to receive the ear loop wire material loaded by the wire material loading mechanism (63), and transmit and shape the ear loop wire material; the cutting mechanism (65) is arranged at one side of the ear loop transmission mechanism (64), and the cutting mechanism (65) is configured to cut the transmitted and shaped ear loop wire material to form the ear loop; and the welding driving mechanism (65) is arranged above the ear loop transmission mechanism (64), the welding driving mechanism (66) is configured to drive the ear loop to the welding mechanism (62), and the welding mechanism (62) is configured to weld the ear loop onto the mask body.

10. The fully automatic mask production line according to claim 9, wherein the ear loop transmission mechanism (64) comprises a transmission bearing frame (641), a transmitting shaping assembly (642), a material clamping driving assembly (643), a material rotating driving assembly (644), and an unloading driving assembly (645); the transmitting shaping assembly (642) is located above the mask overturning and conveying device (5); the material rotating driving assembly (644) is arranged on the transmission bearing frame (641), an output end of the material rotating driving assembly is connected with the transmitting shaping assembly (642), and the material rotating driving assembly is configured to drive the transmitting shaping assembly (642) to rotate; the material clamping driving assembly (643) and the unloading driving assembly (645) are respectively arranged on the transmission bearing frame (641), drive ends of the material clamping driving assembly (643) and the unloading driving assembly (645) directly face a material clamping end and an unloading end of the transmitting shaping assembly (642) respectively; and the transmitting shaping assembly (642) is configured to receive the loaded ear loop wire material, the material clamping driving assembly (643) is configured to drive the material clamping end of the transmitting shaping assembly (642) to clamp the ear loop wire material, the material rotating driving assembly (644) is configured to drive the transmitting shaping assembly (642) to rotate so as to transmit and shape the ear loop wire material, and the unloading driving assembly (645) is configured to drive the unloading end of the transmitting shaping assembly (642) to unload the shaped and cut ear loop.
